# EUROPEAN PATENT SPECIFICATION

(11) **EP 1 107 534 B1**
(45) Date of publication and mention of the grant of the patent: **26.11.2008**
(21) Application number: 00126720.2
(22) Date of filing: 05.12.2000
(51) Int. Cl.: H04N 1/00, H04N 1/327, H04N 1/32

(54) **Information storage system and information control method**
Informationsspeichersystem und Informationskontrollverfahren
Système de stockage d'information et procédé de commande d'information

(30) Priority: 07.12.1999 JP 34811899
(43) Date of publication of application: 13.06.2001
(73) Proprietor: Sony Corporation, Tokyo 141 (JP)
(72) Inventor: Sakai, Yorihiko, Shinagawa-ku, Tokyo (JP); Shindo, Mitsuyoshi, Shinagawa-ku, Tokyo (JP); Ashikawa, Hiroshi, Shinagawa-ku, Tokyo (JP)
(74) Representative: Melzer, Wolfgang

(56) References cited:
- EP-A- 0 858 207
- GB-A- 2 286 944
- US-A- 5 666 215

## Description

### BACKGROUND OF THE INVENTION

### FIELD OF THE INVENTION

The present invention relates to an information storage system and information control method and is applicable to, for example, a digital print ordering/delivery system.

### DESCRIPTION OF THE RELATED ART

When ordering silver-salt photo prints, people conventionally take an exposed film to a print shop, ask the print shop to develop or print the film and fetch the printed film on and after a specified date and time.

Furthermore, with the appearance of digital still cameras that electronically capture images, print services are provided recently in such a manner that people take a recording medium such as a memory card that records image data or floppy disk, or a digital still camera itself to a print shop.

According to such a conventional method, however, people who order prints must visit the print shop etc. twice; to order prints and to receive the prints, which is inconvenient in the sense that it takes much time to order and receive prints.

Furthermore, household color printers are also becoming widespread in recent years, but making large-volume prints takes much time and trouble and costs of a printer and print materials can also become a considerable burden.

Moreover, performing image processing such as combining a captured image with another image or adjusting a hue, etc., involves a troublesome procedure such as purchasing application software available on the market, performing corresponding image processing at home, and then taking a recording medium of such image data created to a print shop, etc. In this case, possessing a personal computer is an indispensable condition and costs on application software etc. can become a considerable burden.

Furthermore, transmitting such printed images to a person at a remote place requires not only the time to visit the shop to receive the above-described printed images and payment of print fees, but also mailing or shipping of the printed images and recording media to the receiver at the remote place, taking the time for arrival at the destination and postage or shipment charge.

An information storage system in which all features of the precharacterizing part of claim 1 are disclosed, is described in EP-A-0 858 207.

A system in which image data scanned from photographic negatives or slides are manipulated to provide a positive image of the photographic negatives or slides so that desired prints can selected by a user based on positive images, wherein the user can access the scanned and stored images via a remote terminal by using identification information, is known from GB-A-2 286 944 and US-A-5 666 215.

### SUMMARY OF THE INVENTION

It is an object of the present invention is to provide an information storage system and information control method capable of significantly improving convenience for the users performing image processing and managing.

This object is achieved by an information storage system and information control method according to the enclosed independent claims. Advantageous features of the present invention are defined in the corresponding subclaims.

As a result, this information storage system allows the user to easily read image data stored in the server apparatus from any terminal based on identification information, and therefore sharing such identification information with the other end of communication at a remote place beforehand makes it possible to easily transmit/receive the image data via the server apparatus, and in this way reduce the trouble in transmitting/receiving such an image to/from the other end of communication at the remote place.

The nature, principle and utility of the present invention will become more apparent from the following detailed description when read in conjunction with the accompanying drawings in which like parts are designated by like reference numerals or characters.

### BRIEF DESCRIPTION OF THE DRAWINGS

In the accompanying drawings:
Fig 1 is a block diagram showing a configuration of a print system according to an embodiment;
Fig. 2 is a block diagram showing a configuration of a print service supply apparatus;
Fig. 3 is a block diagram showing a configuration of a personal computer in the print service supply apparatus;
Fig. 4 is a block diagram showing a configuration of a print ordering apparatus;
Fig. 5 is a block diagram showing a configuration of a personal computer in the print ordering apparatus;
Fig. 6 is a block diagram showing a configuration of a host terminal based on identification information, and therefore sharing such identification information with the other end of communication at a remote place beforehand makes it possible to easily transmit/receive the image data via the server apparatus, and in this way reduce the trouble in transmitting/receiving such an image to/from the other end of communication at the remote place.

The nature, principle and utility of the present invention will become more apparent from the following detailed description when read in conjunction with the accompanying drawings in which like parts are designated by like reference numerals or characters.

### BRIEF DESCRIPTION OF THE DRAWINGS

In the accompanying drawings:

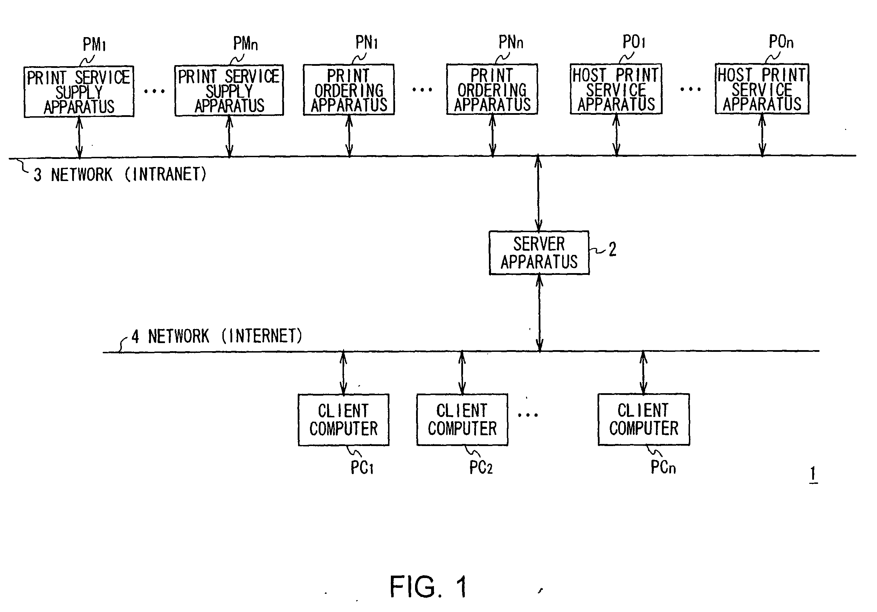

Fig 1 is a block diagram showing a configuration of a print system according to an embodiment;

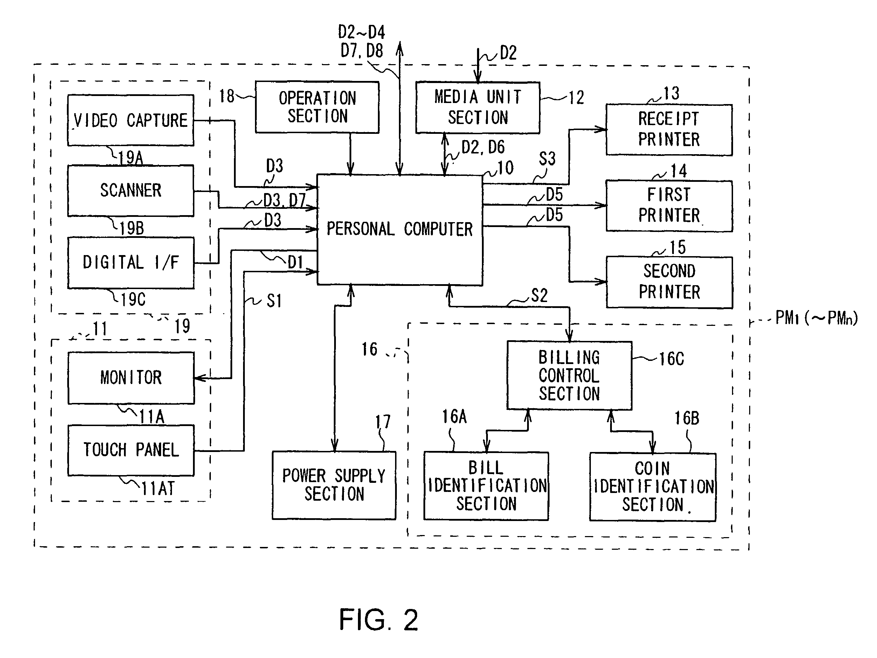

Fig. 2 is a block diagram showing a configuration of a print service supply apparatus;

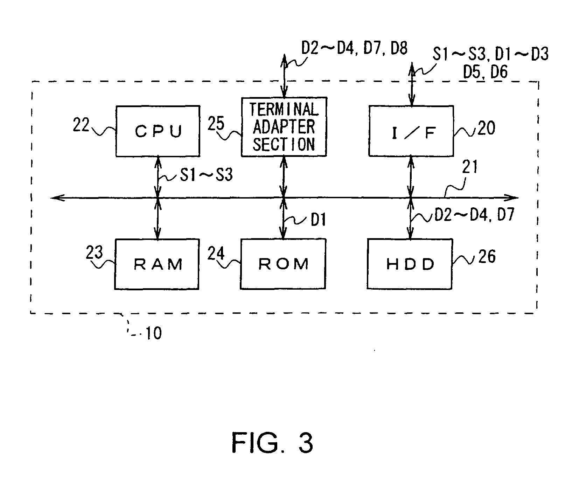

Fig. 3 is a block diagram showing a configuration of a personal computer in the print service supply apparatus;

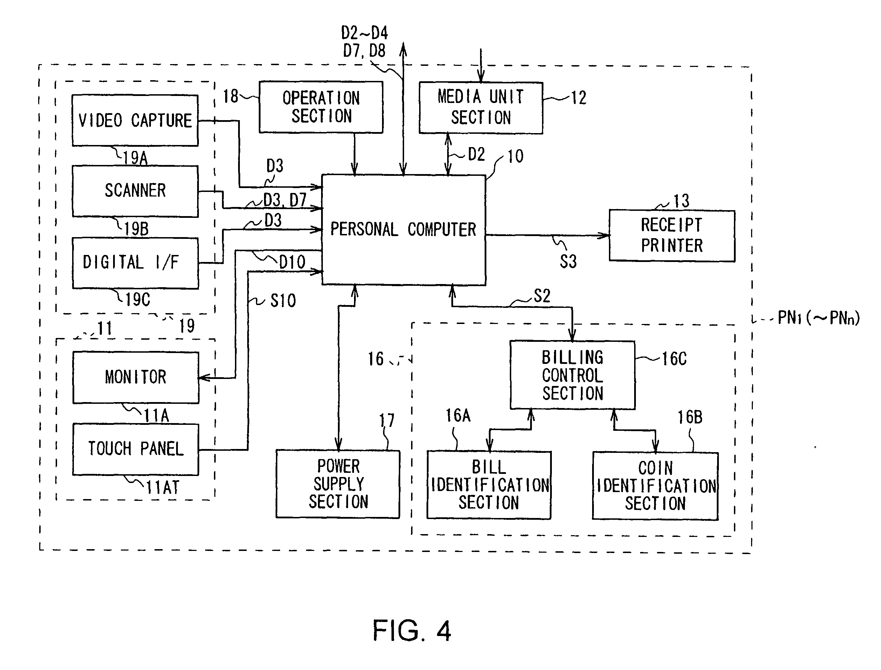

Fig. 4 is a block diagram showing a configuration of a print ordering apparatus;

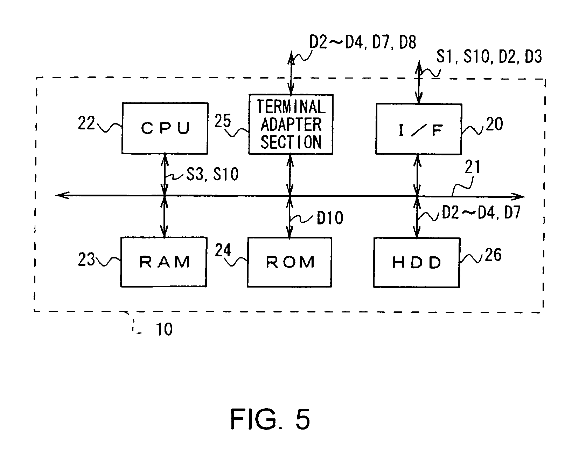

Fig. 5 is a block diagram showing a configuration of a personal computer in the print ordering apparatus;

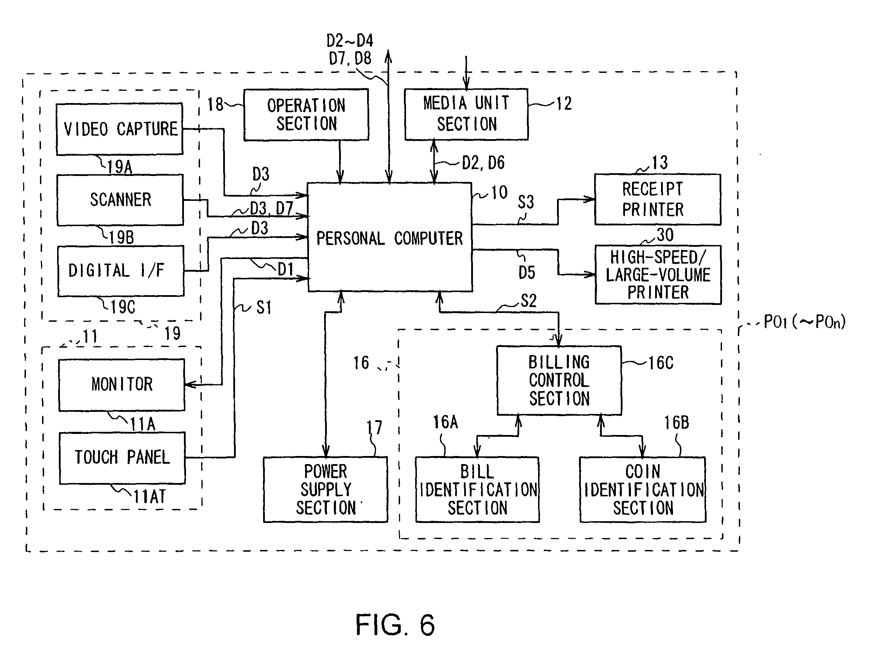

Fig. 6 is a block diagram showing a configuration of a host print service apparatus;

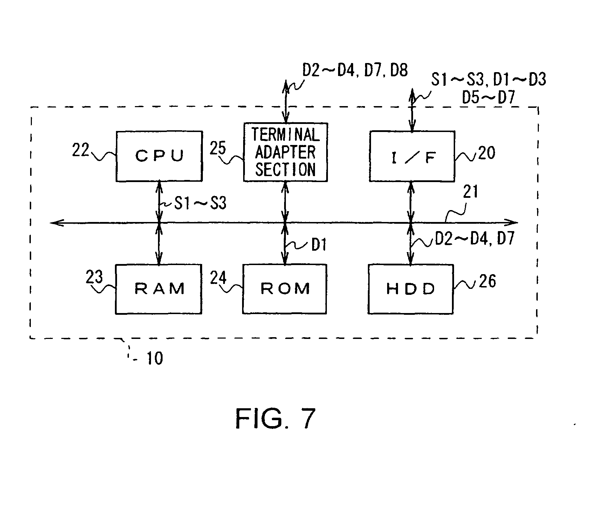

Fig. 7 is a block diagram showing a configuration of a personal computer in the host print service apparatus;

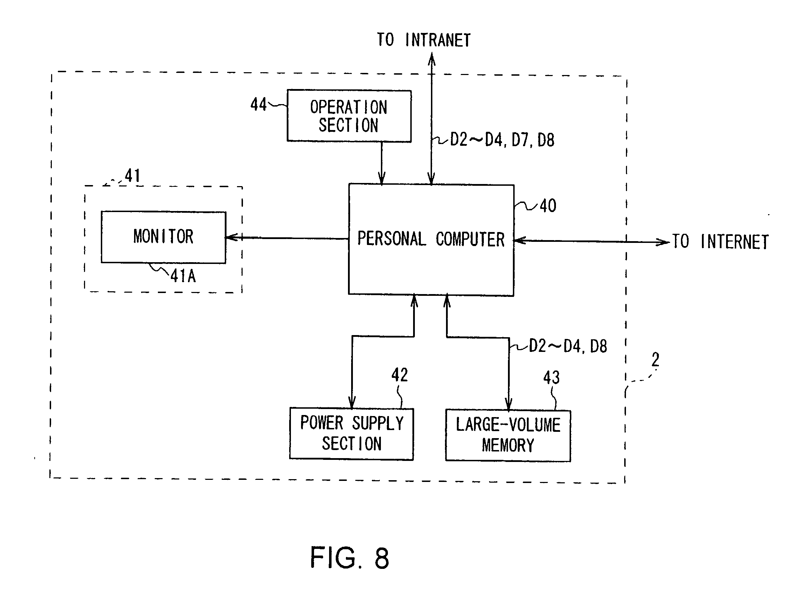

Fig. 8 is a block diagram showing a configuration of a server apparatus;

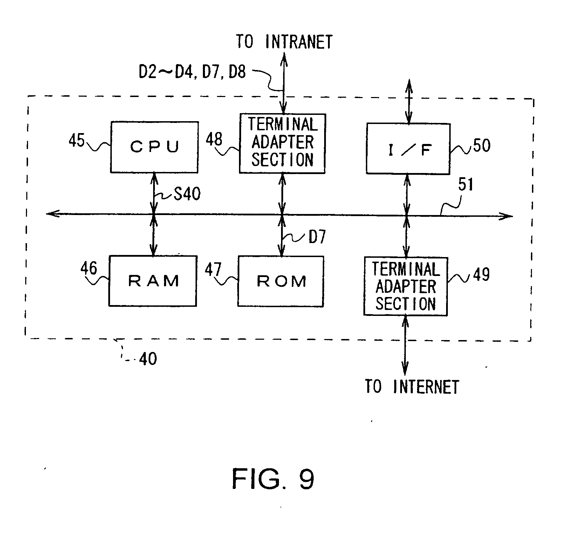

Fig. 9 is a block diagram showing a configuration of a personal computer in the server apparatus;

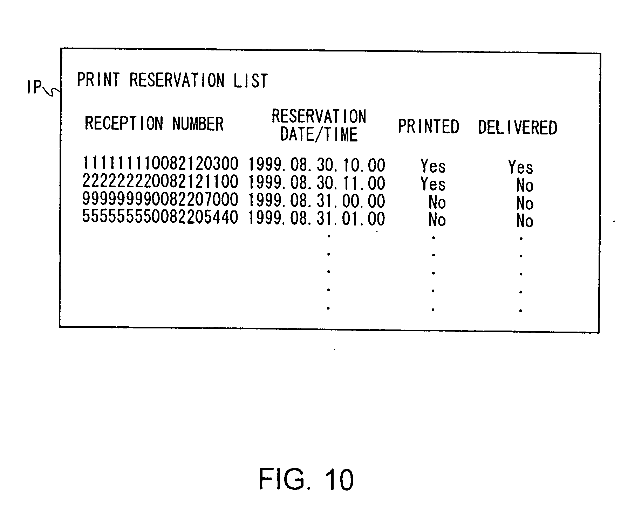

Fig. 10 is a chart to explain a list of print reservations;

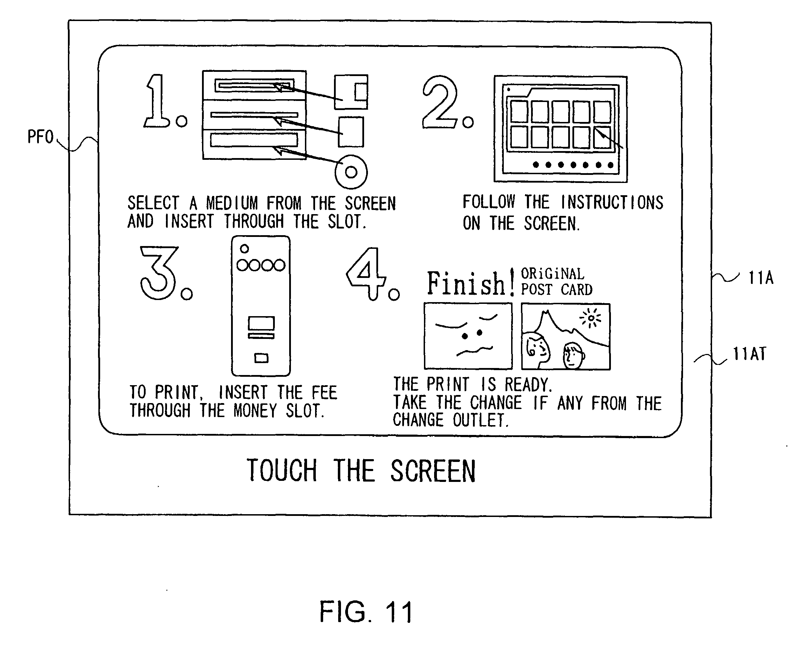

Fig. 11 is a schematic diagram showing an initial screen displayed on the monitor;

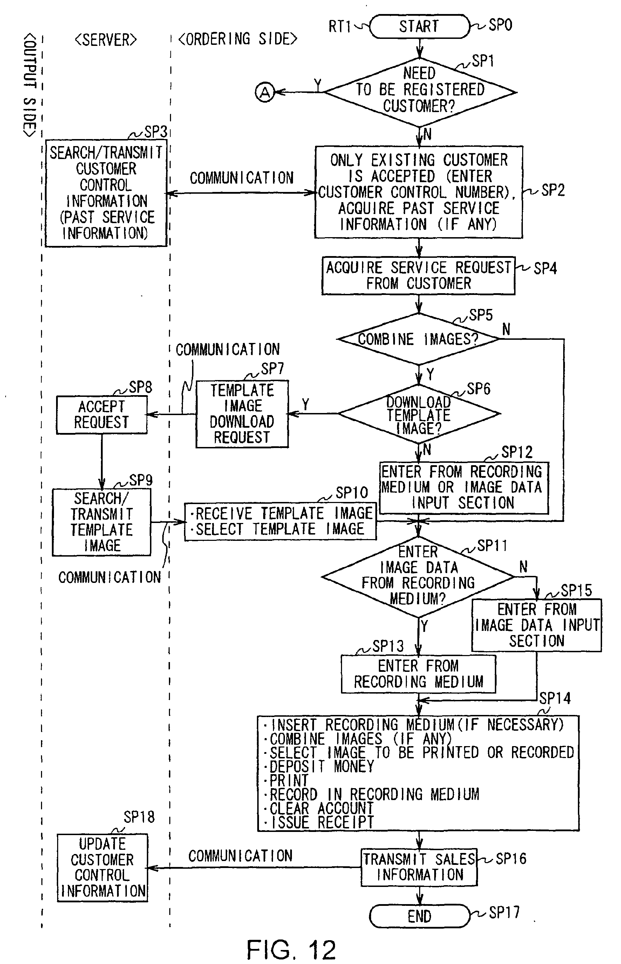

Fig. 12 is a flow chart to explain a print ordering/delivery processing procedure;

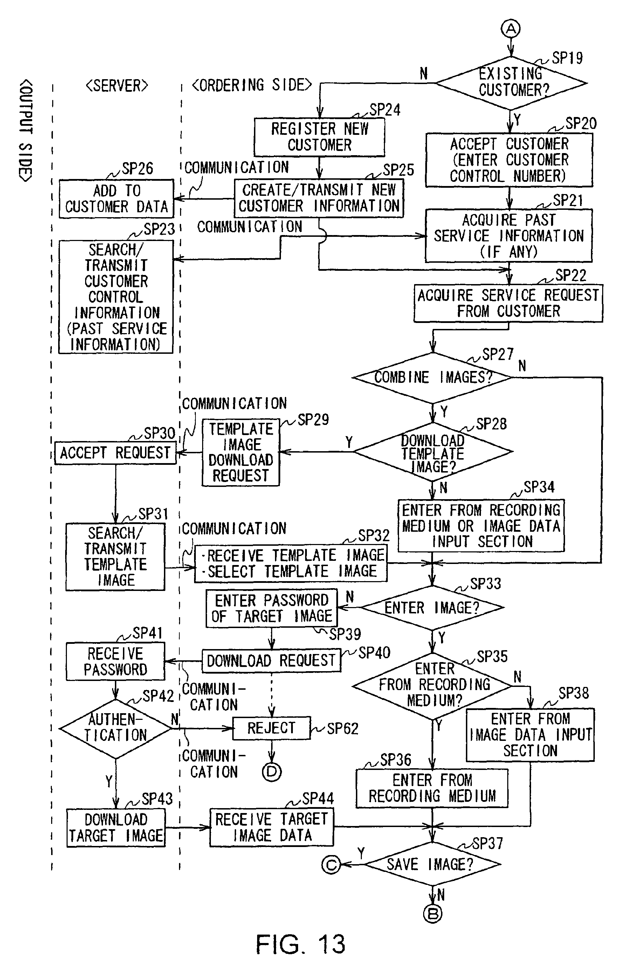

Fig. 13 is a flow chart to explain the print ordering/delivery processing procedure;

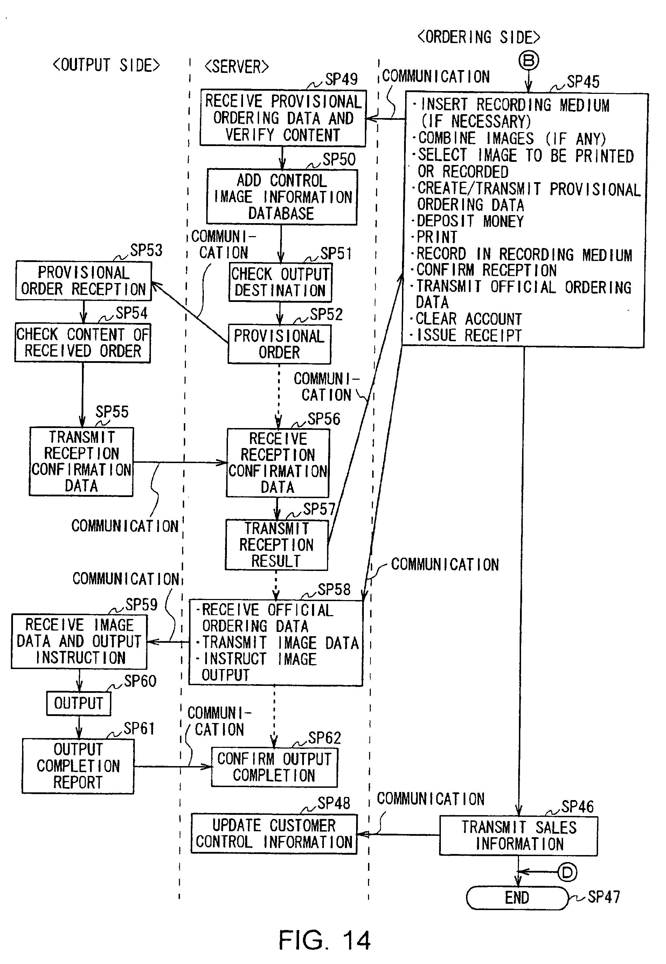

Fig. 14 is a flow chart to explain the print ordering/delivery processing procedure;

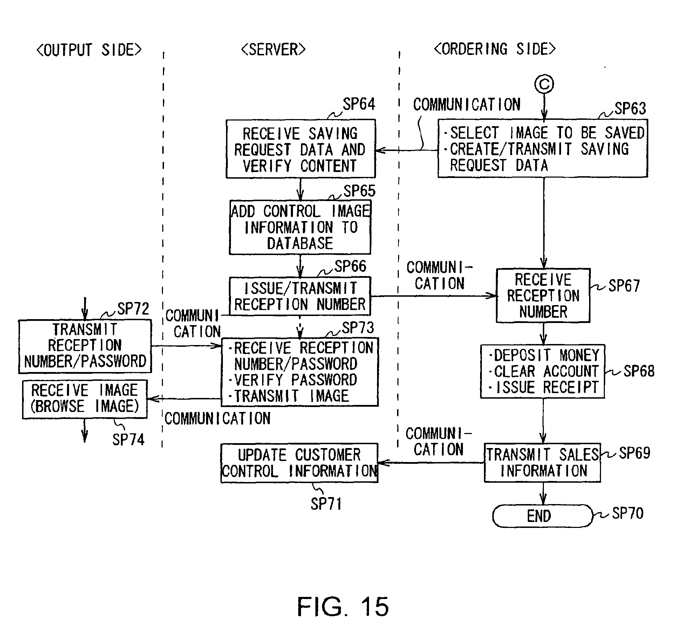

Fig. 15 is a flow chart to explain the print ordering/delivery processing procedure;

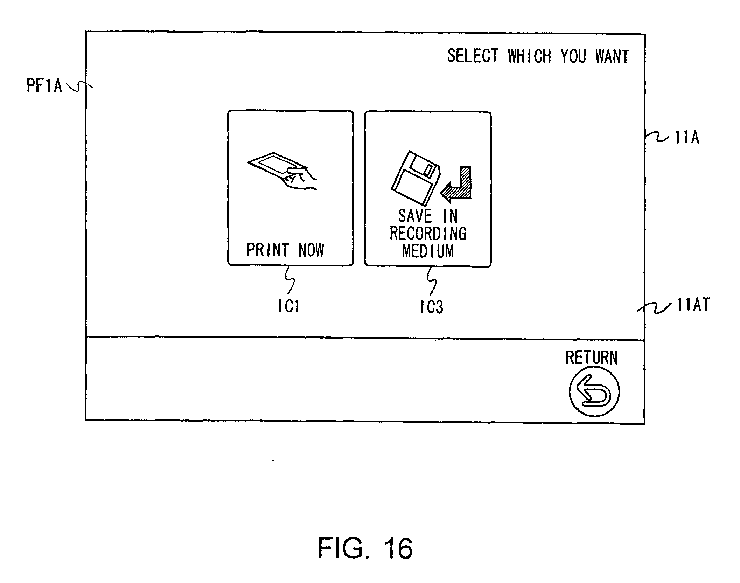

Fig. 16 is a schematic diagram showing an operation selection screen displayed on the monitor;

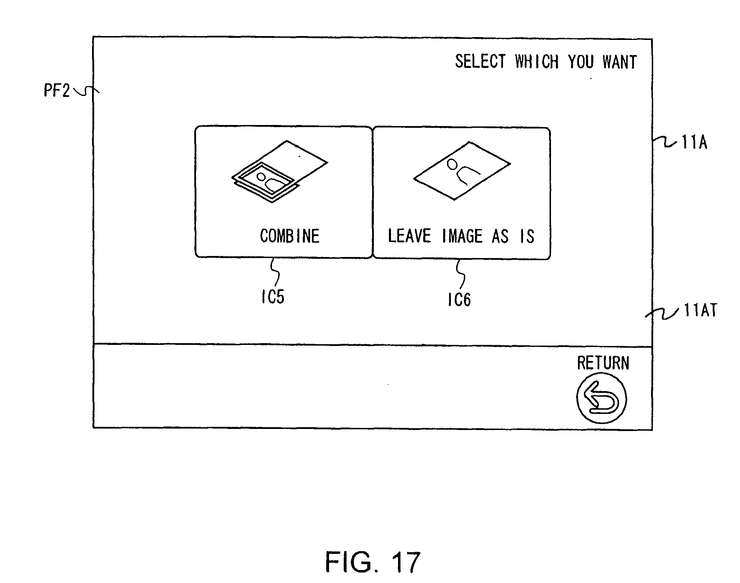

Fig. 17 is a schematic diagram showing a template setting screen displayed on the monitor;

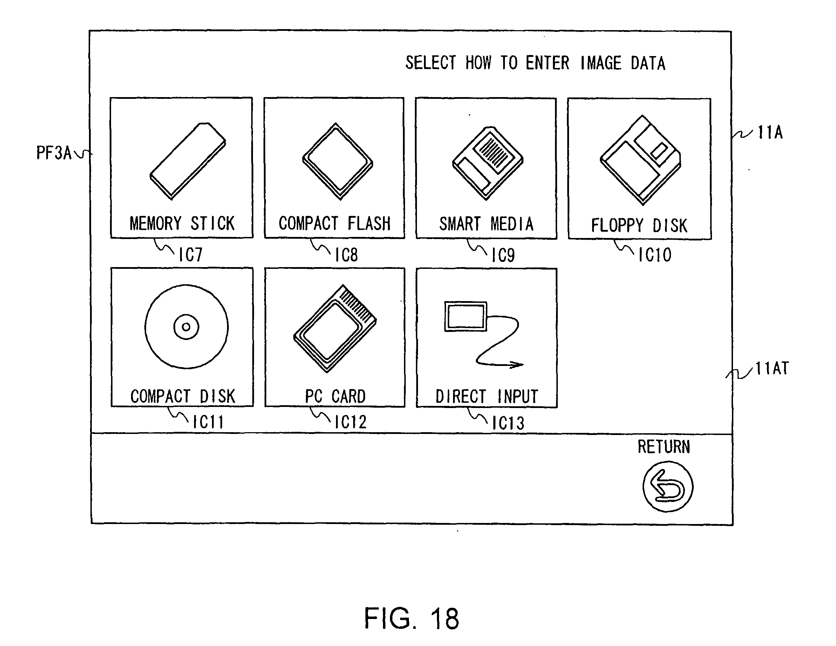

Fig. 18 is a schematic diagram showing an image input selection screen displayed on the monitor;

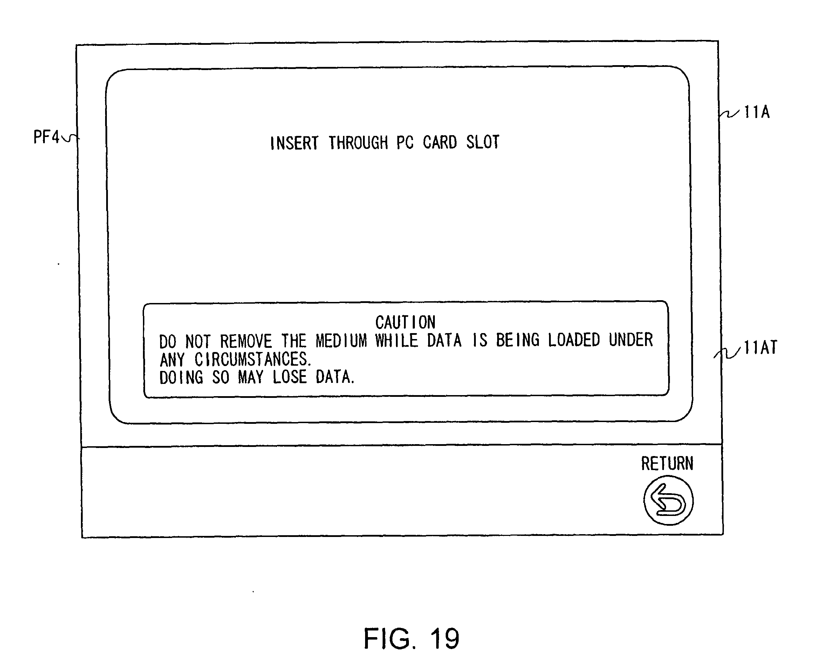

Fig. 19 is a schematic diagram showing a media insertion message displayed on the monitor;

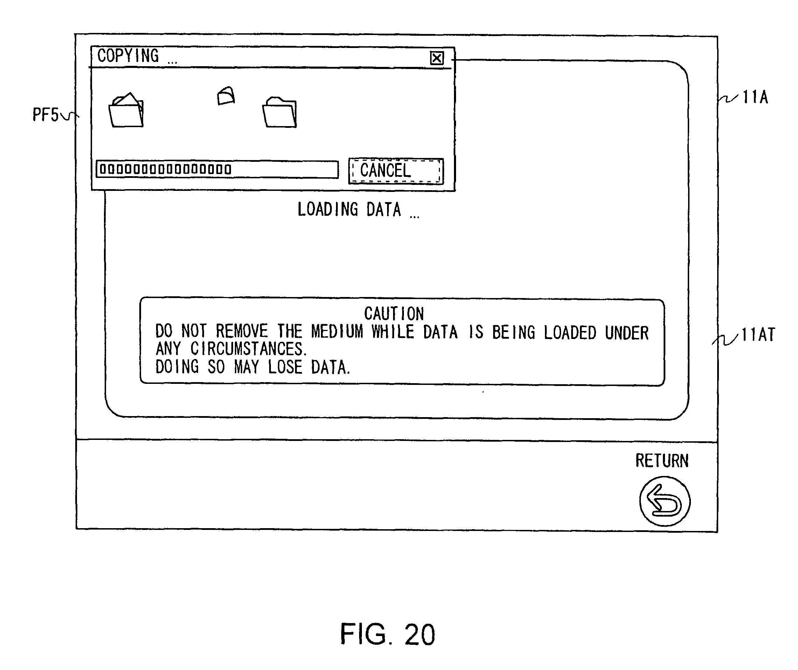

Fig. 20 is a schematic diagram showing a message "loading data" displayed on the monitor;

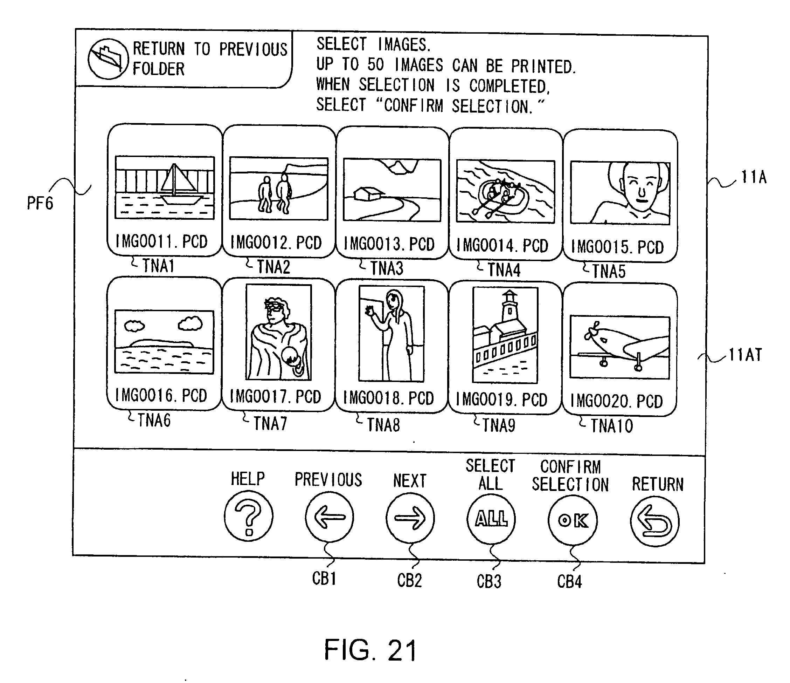

Fig. 21 is a schematic diagram showing a print image selection screen displayed on the monitor;

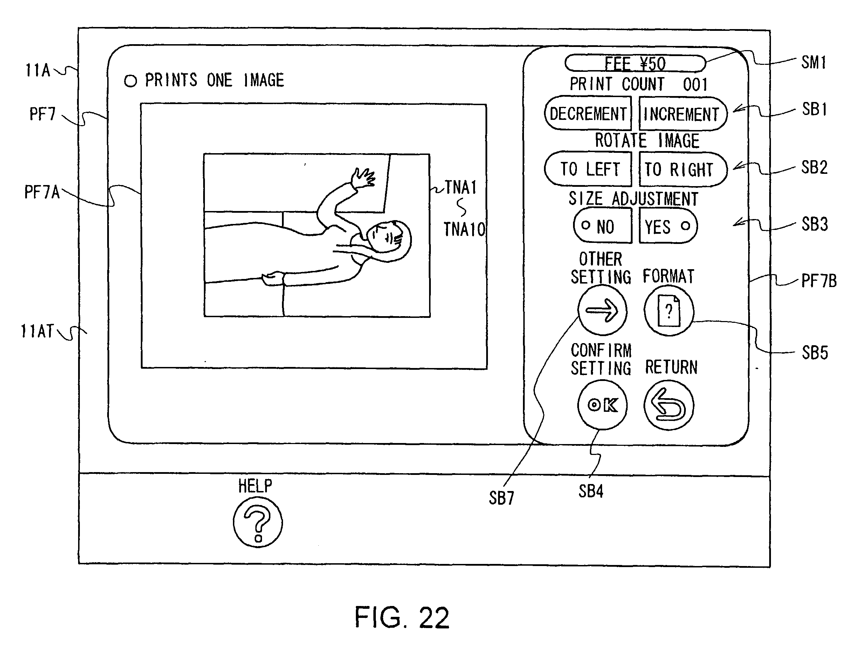

Fig. 22 is a schematic diagram showing a print setting screen displayed on the monitor;

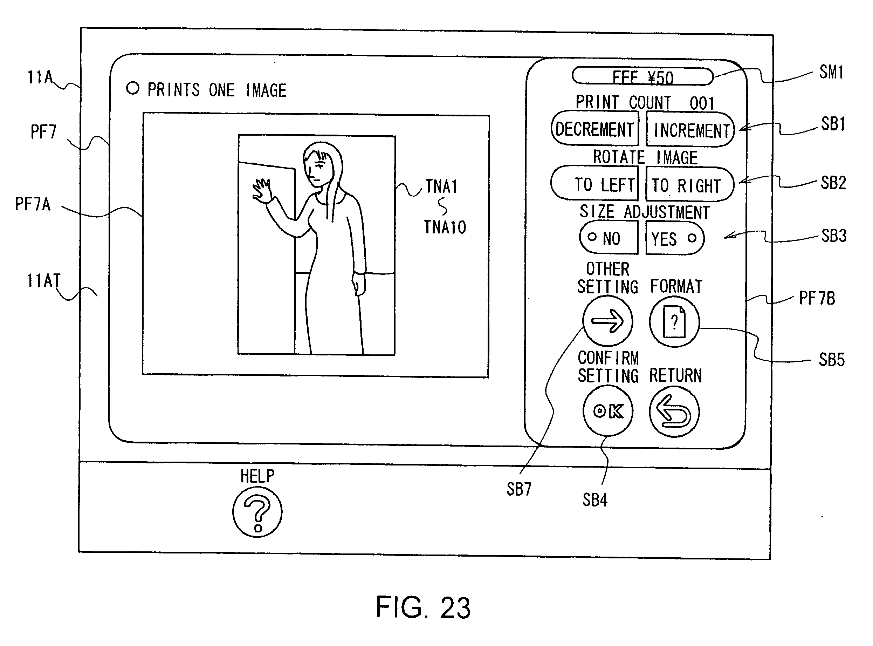

Fig. 23 is a schematic diagram showing a print setting screen displayed on the monitor;

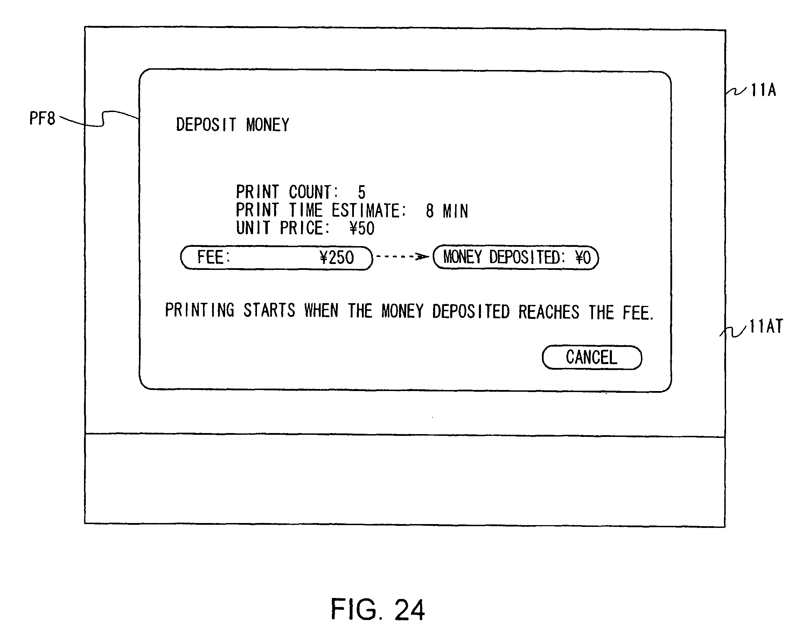

Fig. 24 is a schematic diagram showing a charging screen displayed on the monitor;

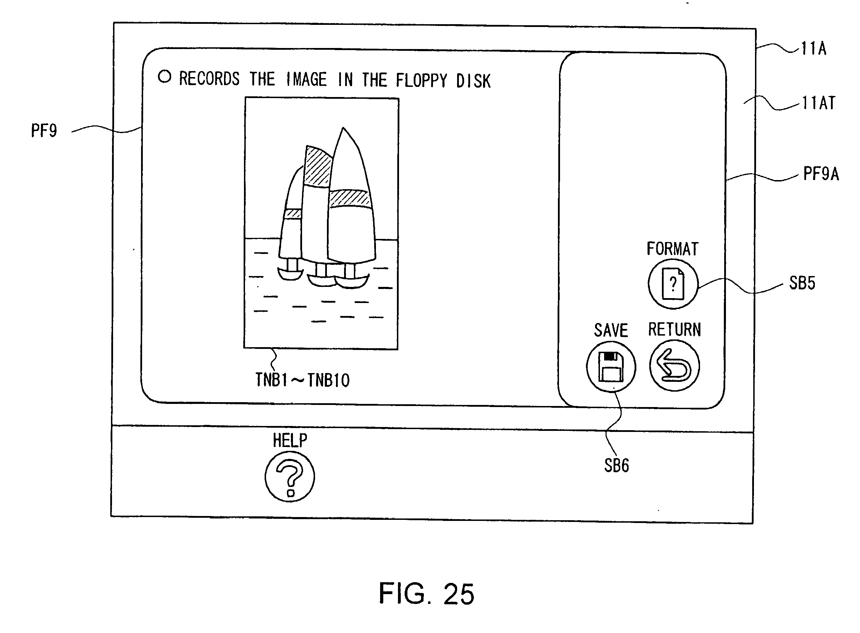

Fig. 25 is a schematic diagram showing a recording setting screen displayed on the monitor;

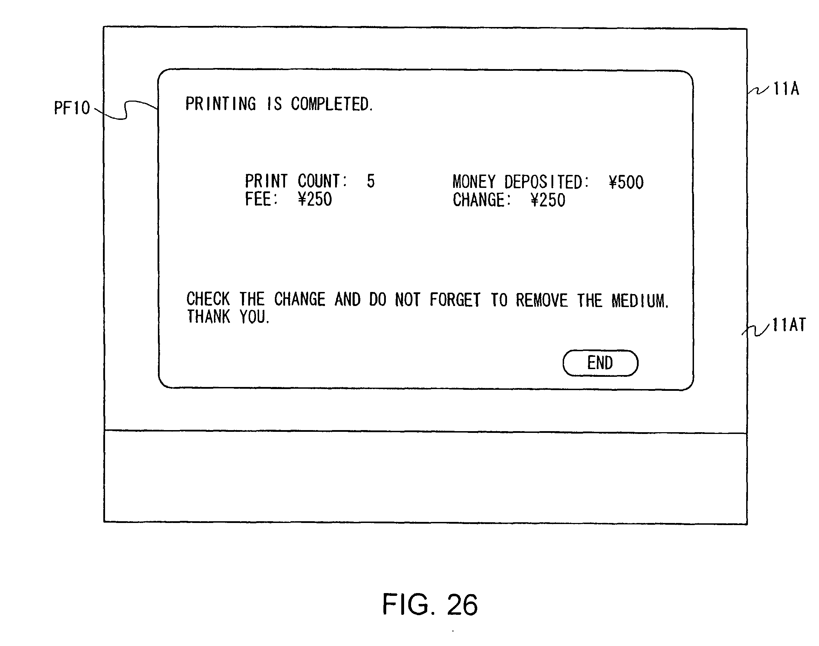

Fig. 26 is a schematic diagram showing a print completion screen displayed on the monitor;

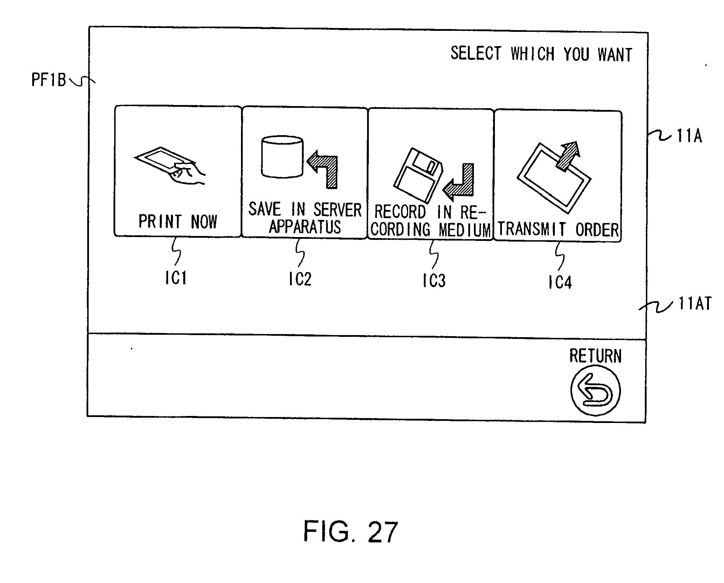

Fig. 27 is a schematic diagram showing an operation selection screen displayed on the monitor;

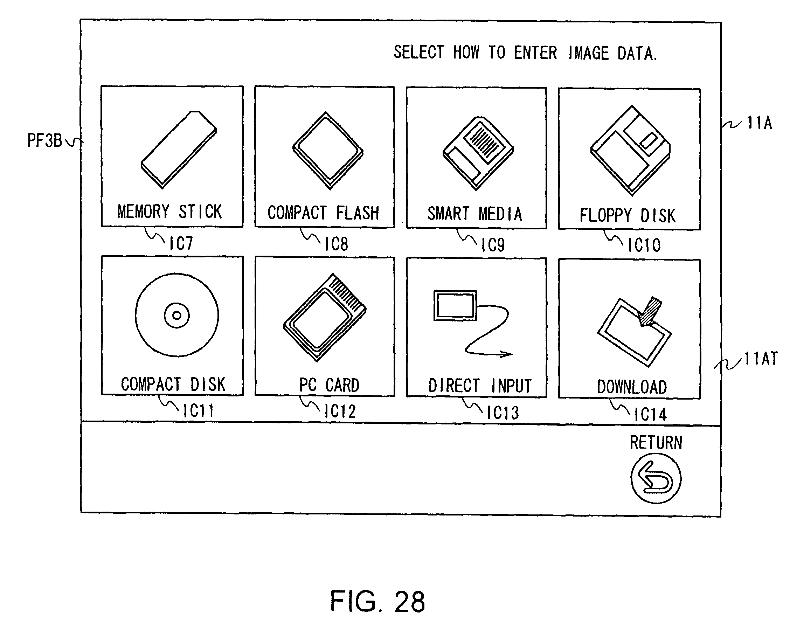

Fig. 28 is a schematic diagram showing an image input selection screen displayed on the monitor;

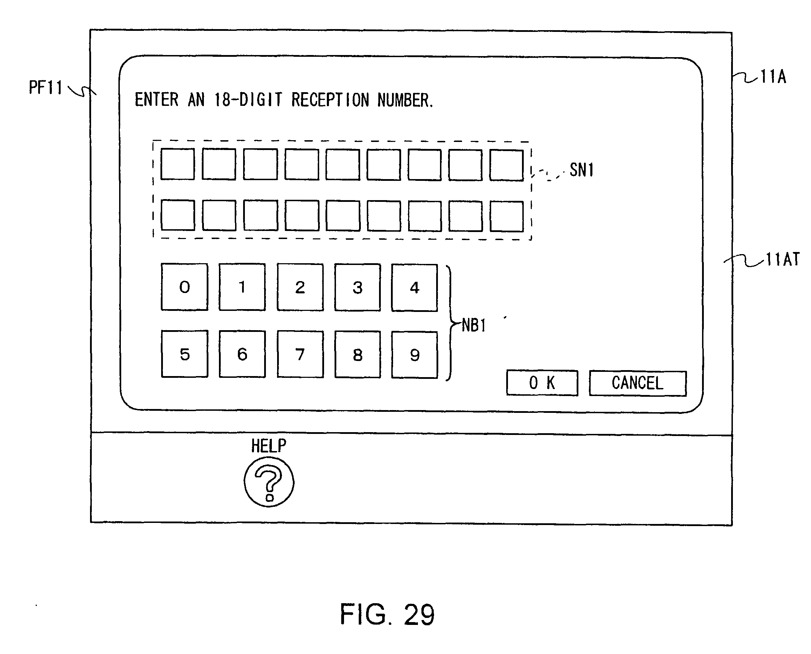

Fig. 29 is a schematic diagram showing a reception number input screen displayed on the monitor;

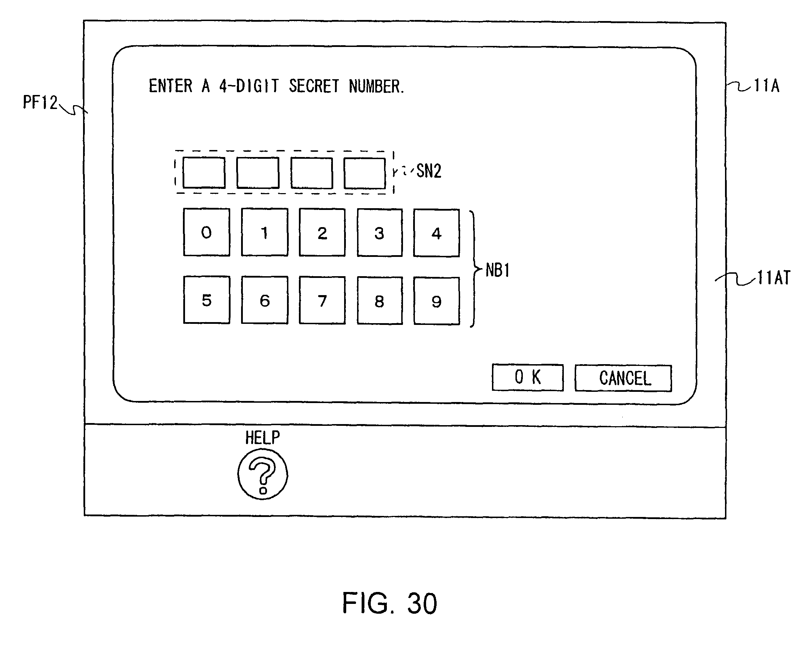

Fig. 30 is a schematic diagram showing a secret number input screen displayed on the monitor;

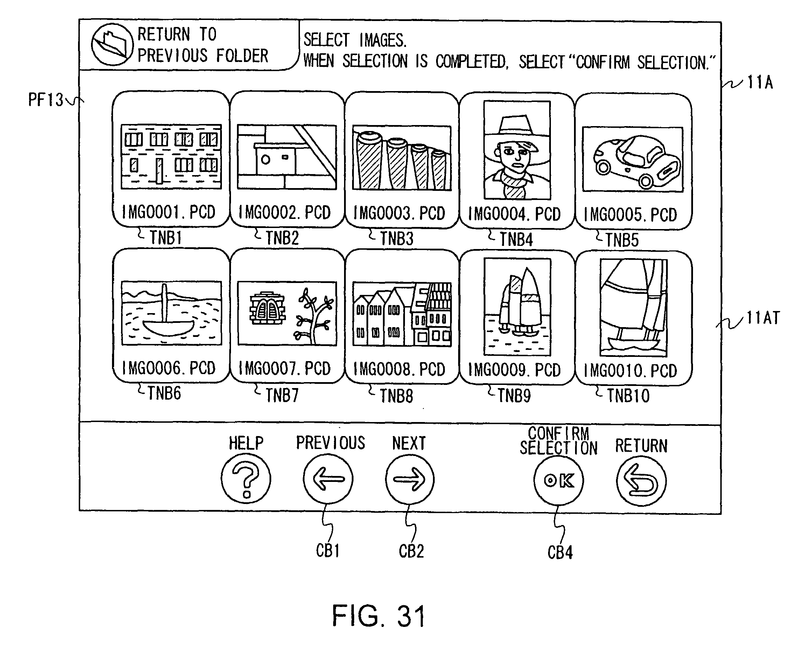

Fig. 31 is a schematic diagram showing an order image selection screen displayed on the monitor;

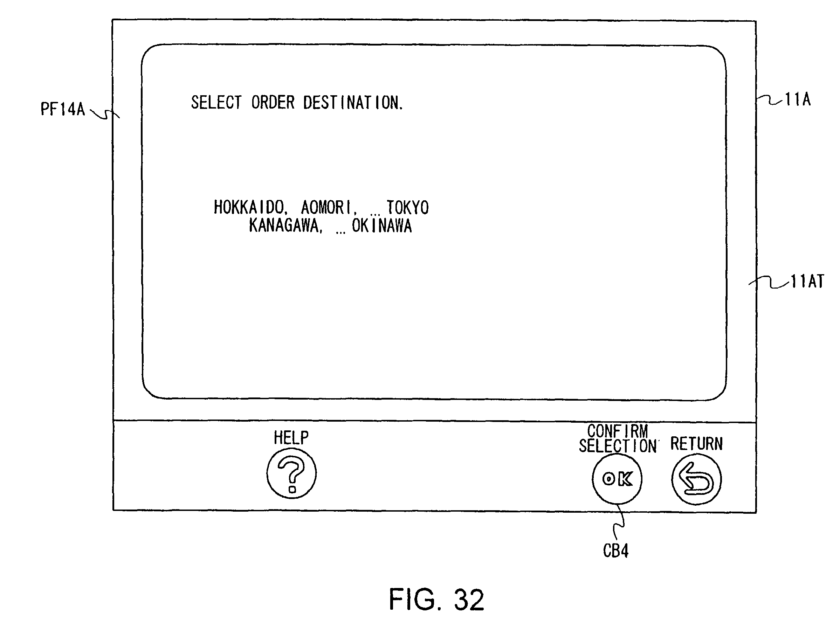

Fig. 32 is a schematic diagram showing an order destination selection screen displayed on the monitor;

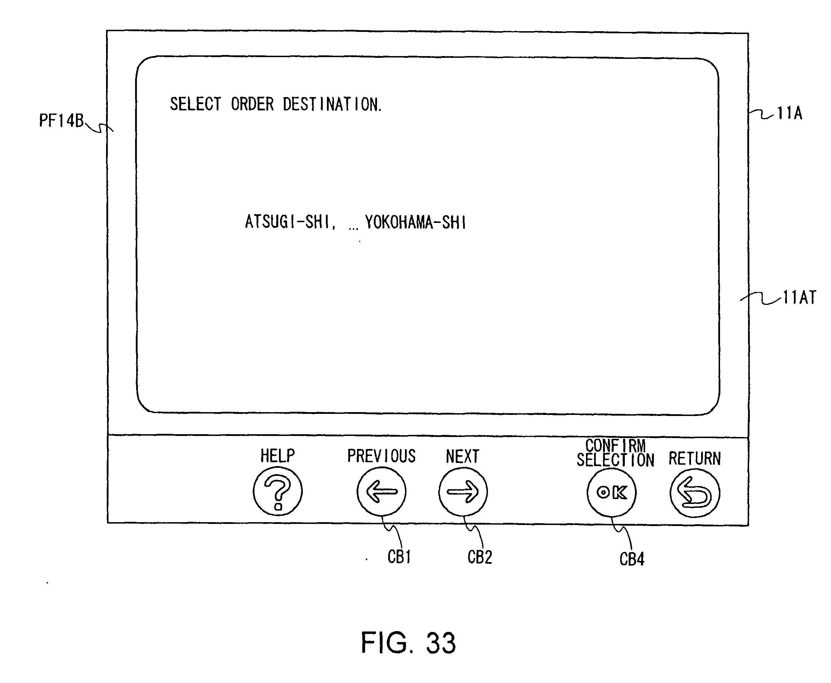

Fig. 33 is a schematic diagram showing an order destination selection screen displayed on the monitor;

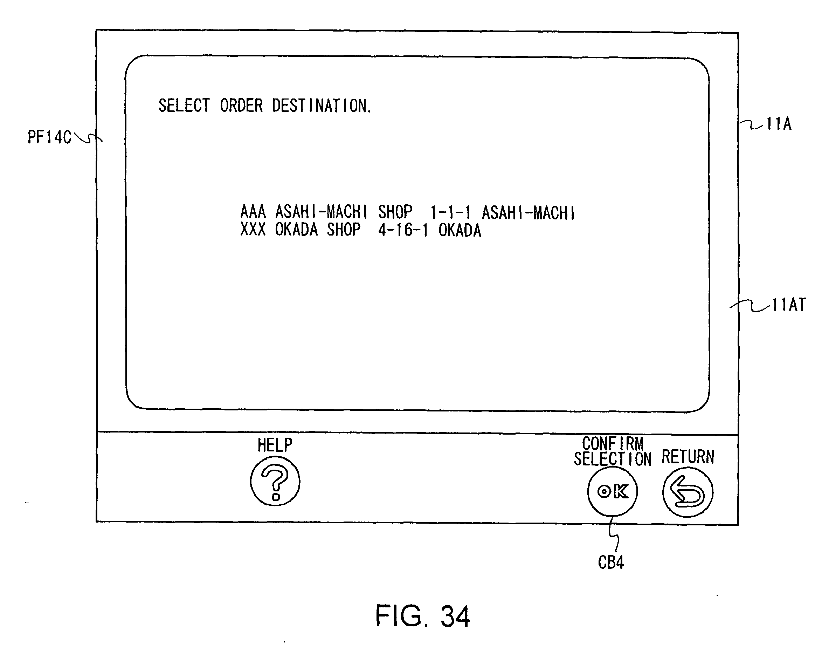

Fig. 34 is a schematic diagram showing an order destination selection screen displayed on the monitor;

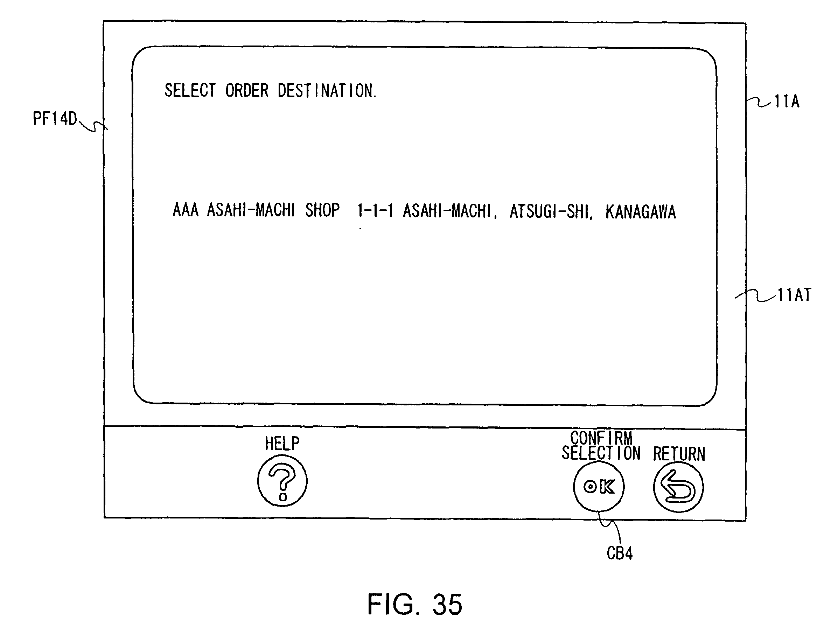

Fig. 35 is a schematic diagram showing an order destination confirmation screen displayed on the monitor;

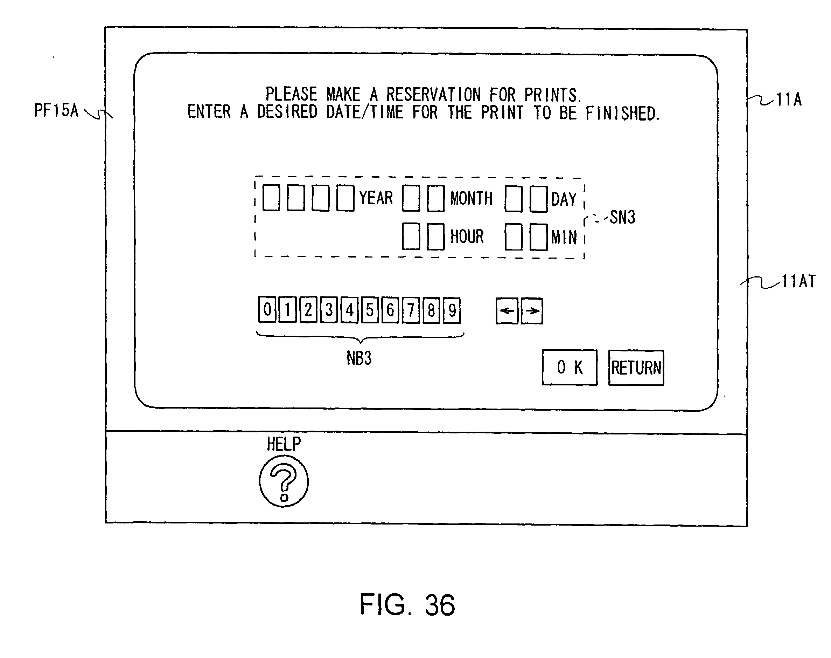

Fig. 36 is a schematic diagram showing a print reservation screen displayed on the monitor;

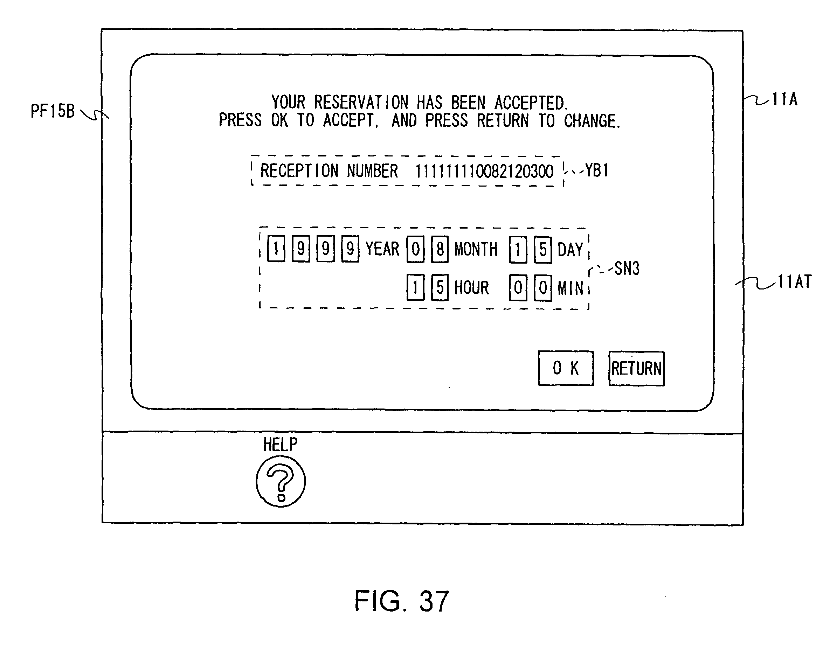

Fig. 37 is a schematic diagram showing a print reservation screen displayed on the monitor;

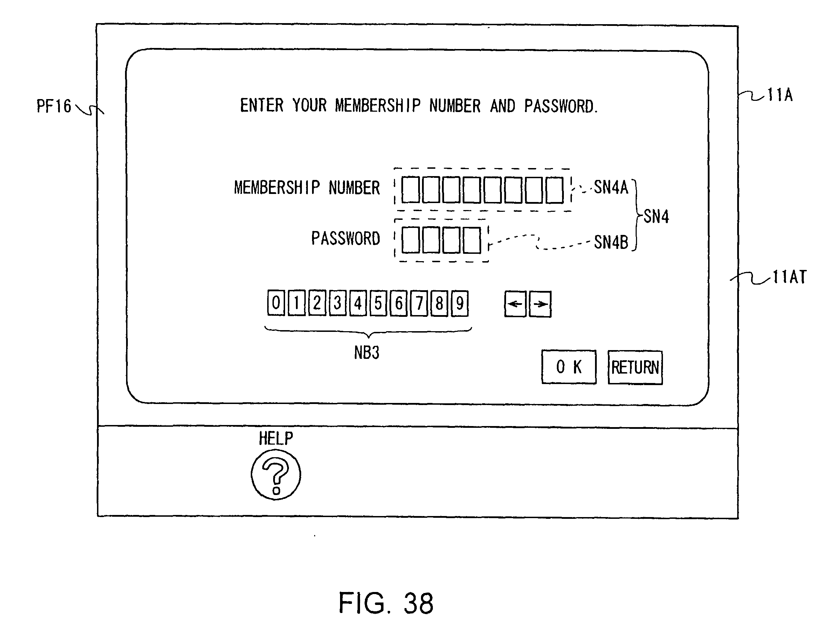

Fig. 38 is a schematic diagram showing a user data input screen displayed on the monitor;

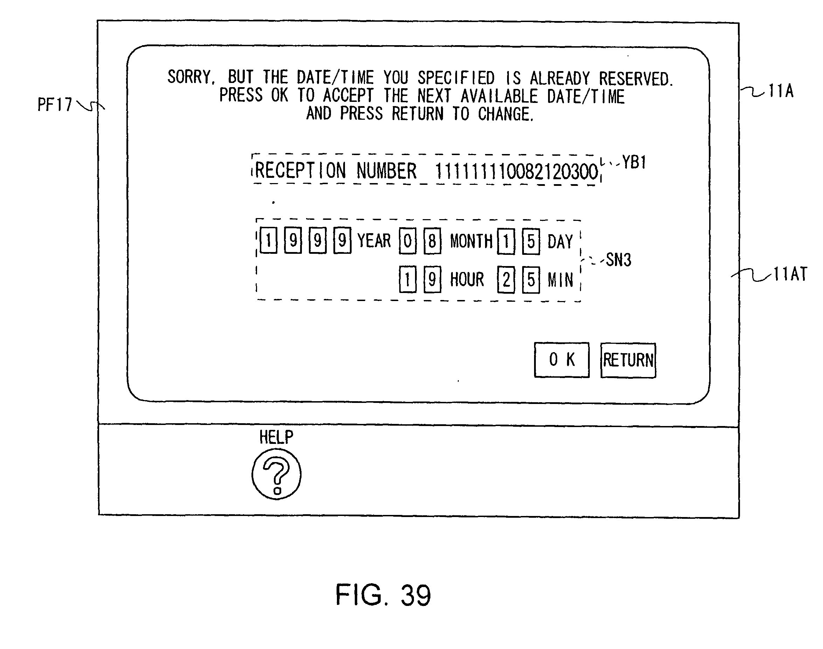

Fig. 39 is a schematic diagram showing a print reservation change screen displayed on the monitor; and

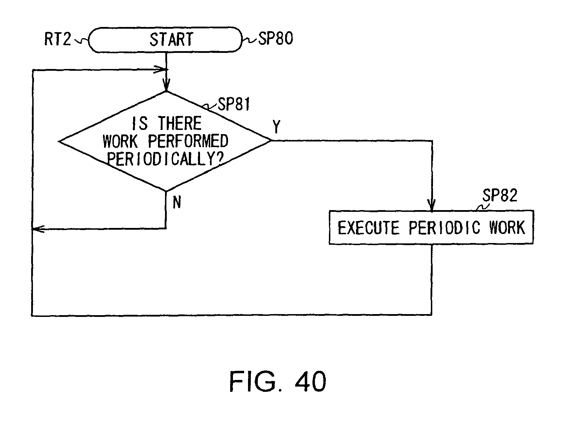

Fig. 40 is a flow chart to explain a periodic work processing procedure.

### DETAILED DESCRIPTION OF THE EMBODIMENT

Preferred embodiments of the present invention will be described with reference to the accompanying drawings:

### (1) Configuration of Print System according to This Embodiment

Referring to Fig. 1, a reference numeral 1 denotes an overall print system according to this embodiment, configured by a plurality of print service supply apparatuses PM₁ to PMₙ to order prints of images electronically captured by a digital still camera (not shown) etc. into a recording medium (not shown), print ordering apparatuses PN₁ to PNₙ, host print service apparatuses PO₁ to POₙ to print the images and a server apparatus 2 to control image data D2 of the images and ordering data D8, all of which are mutually connected via network 3 such as telephone line network.

This server apparatus 2 is further connected to a plurality of client computers PC₁, PC₂ to PCₙ made up of normal personal computers owned by the users of digital still cameras etc. via a network 4 such as an internet or the like.

Each of the print service supply apparatuses PM₁ to PMₙ and the print ordering apparatuses PN₁ to PNₙ is installed in the street easily accessible to the users, for example, at a convenience store, drug store or near ticket gates at a station and each of the host print service apparatuses PO₁ to POₙ is installed at a convenience store, photo shop, or so-called "minilaboratory" which is installed inside a shop like a small photo shop in a supermarket.

In the case of the host print service apparatuses PO₁ to POₙ in particular, a high-speed printer 30, which will be described later, can process prints at high speed, and therefore it is possible to print images in large volume at a time compared to the first and second printers 14 and 15 (Fig. 2) of the print service supply apparatuses PM₁ to PMₙ. Thus, equipped with the highperformance, high-speed printer 30, the host print service apparatuses PO₁ to POₙ are designed to be operated not directly by the user, but by employees of the shops at which the host print service apparatuses are installed.

In this case, each of the print service supply apparatuses PM₁ to PMₙ captures image data (hereinafter referred to as "image data brought by the user") D2, D3 recorded in a recording medium or digital still camera brought by the user. By the way, the image based on each image data piece is assigned an identification number (hereinafter referred to as "image ID") etc. to identify individual images, which allows the user to specify a desired image using this image ID.

Then, each of the print service supply apparatuses PM₁ to PMₙ prints images that the user tries to ask for printing (hereinafter referred to as "selected images") from among the images based on this image data D2, D3 brought by the user on printing media (post card, seal, etc.) using the print service supply apparatuses PM₁ to PMₙ or host print service apparatuses PO₁ to POₙ desired by the user or creates ordering data D8 to record in a predetermined medium (memory stick, compact flash, smart media, floppy disk, compact disk or PC card, etc.), transmits the ordering data together with the corresponding image data D2, D3 brought by the user to the server apparatus 2 and stores the data for a predetermined period of time.

Moreover, each of the print service supply apparatuses PM₁ to PMₙ prints the selected images based on image data (hereinafter referred to as "server image data") D4 stored in the server apparatus 2 supplied from the image data D2, D3 brought by the user or the server apparatus 2 on a printing medium on the spot, or records the image data D2, D3 brought by the user or the server image data D4 in a predetermined recording medium.

On the other hand, each of the print ordering apparatuses PN₁ to PNₙ captures the image data D2, D3 brought by the user, prints the selected image based on these on a printing medium using the print service supply apparatuses PM₁ to PMₙ or the host print service apparatuses PO₁ to POₙ desired by the user or creates ordering data D8 to record the image data in various kinds of recording media, transmits the image data together with the corresponding image data D2, D3 brought by the user to the server apparatus 2 and stores the data for a predetermined period of time.

According to the ordering data D8 supplied from the print service supply apparatuses PM₁ to PMₙ or the print ordering apparatuses PN₁ to PNₙ via the server apparatus 2, each of the host print service apparatuses PO₁ to POₙ prints the selected images based on the server image data D4 supplied together with the ordering data D8 on a printing medium at high speed.

Moreover, each of the host print service apparatuses PO₁ to POₙ captures the image data D2, D3 brought by the user, prints the selected images based on these on a printing medium using the print service supply apparatuses PM₁ to PMₙ or the host print service apparatuses PO₁ to POₙ desired by the user or creates ordering data D8 to record in a predetermined recording medium, transmits the ordering data together with the corresponding image data D2, D3 brought by the user to the server apparatus 2 and stores the data for a predetermined period of time.

Furthermore, each of the host print service apparatuses PO₁ to POₙ prints the selected images based on the image data D2, D3 brought by the user on a printing medium at high speed on the spot, or records the image data D2, D3 brought by the user on a predetermined recording medium.

The server apparatus 2 stores the image data D2, D3 brought by the user supplied from the print service supply apparatuses PM₁ to PMₙ or the print ordering apparatuses PN₁ to PNₙ based on the ordering data D8 according to the image data D2, D3 brought by the user supplied together with the image data D2, D3 for a predetermined period of time.

Then, based on the ordering data D8, the server apparatus 2 transmits the image data D2, D3 brought by the user to the host print service apparatuses PO₁ to POₙ specified by the user as server image data D4 and at the same time indicates the output of the server image data D4 (recorded in a printing or recording medium) to the host print service apparatuses PO₁ to POₙ.

Moreover, when the user transmits a request for registration through this ordering data D8, the server apparatus 2 gives the user who is the transmitter of the ordering data D8 a customer control number (hereinafter referred to as "ID number") and at the same time creates a customer list and performs user control based on the customer list.

In this case, the user is allowed to browse or use images based on the image data stored in the server apparatus 2 by entering/setting this ID number in the print service supply apparatuses PM₁ to PMₙ and the print ordering apparatuses PN₁ to PNₙ or receive the above-described various services (printing, image saving, recording in various kinds of recording media, ordering, etc.) through simplified operations so that various kinds of setting input operations are given priority based on the user's past utilization history and according to preferences of the user.

Thus, using this print system 1, the user can print, for example, images captured in an athletic meet for children at the nearest print service supply apparatus PM₁ to PMₙ on the spot and in the case where there are many such images, the user can order prints at the nearest print service supply apparatus PM₁ to PMₙ or print ordering apparatus PN₁ to PNₙ and visit the shop at which the host print service apparatus PO₁ to POₙ is installed to receive the printed images on the date and time reserved at that time.

Furthermore, at the time of transmitting these images to the user's relatives at a remote place, the user asks the nearest print service supply apparatus PM₁ to PMₙ or print ordering apparatus PN₁ to PNₙ to store the image data of the images in the server apparatus 2. Then, the relatives at a remote place can access the server apparatus 2 through the nearest print service supply apparatus PM₁ to PMₙ or the host print service apparatus PO₁ to POₙ within a specified period to read the stored image data, print desired images from among the images based thereupon or record in various kinds of recording medium.

In addition to such a configuration, in this print system 1, each of the client computers PC₁ to PCₙ is a normal personal computer and in the case where a home or office, etc. is provided with such a personal computer environment, the personal computer above is used as a client computer PC₁ to PCₙ and a predetermined program (hereinafter referred to as "print ordering program") is pre-installed to order the host print service apparatus PO₁ to POₙ of the intranet (network 3) of the above-described print provider for prints.

This print ordering program is acquired and downloaded by accessing the server apparatus 2 serving as the print order receiver. Then, each of client computers PC₁ to PCₙ is assigned a user specific ID number, which will be described later, when downloading this print ordering program, can download the image data stored in the server apparatus 2 by connecting to the server apparatus 2 via the internet (network 4) based on the print ordering program, print images based on the image data using its own printer or order the nearest host print service apparatus PO₁ to POₙ for prints as needed.

### (2) Explanation of Apparatus Connected to Print System

### (2-1) Configuration of print service supply apparatus

The print service supply apparatus PM₁ to PMₙ is actually configured as shown in Fig. 2 and provided with a personal computer 10, a display section 11 made up of a monitor 11A with a touch panel 11AT, a receipt issuance printer (hereinafter referred to as "receipt printer") 13, a first and second printers 14 and 15, a media unit section 12 made up of drives (not shown) of the above-described various recording media, a billing section 16 made up of a billing control section 16C, a bill identification section 16A and a coin identification section 16B, a power supply section 17, an image data input section 19 made up of a video capture board 19A, a scanner 19B and a digital interface circuit 19C, and an operation section 18 for maintenance made up of a mouse or keyboard.

The personal computer 10 is configured as shown in Fig. 3 by a central processing unit (CPU) 22, a random access memory (RAM) 23, a read-only memory (ROM) 24, a terminal adapter section 25, a hard disk apparatus 26 and an interface circuit 20, all of which are mutually connected via a bus 21.

Then, based on a predetermined operation program stored in ROM 24, various commands S1 given via the touch panel 11AT, billing approval signal S2 given from the billing section 16 when money is deposited through a money slot (not shown), and the image data D2, D3 of various recording media or digital still camera captured by the media unit section 12 or image data input section 19 and maintenance operations given via the operation section 18 are captured into the CPU 22 sequentially via the interface circuit 20 and bus 21, and the server image data D4 transmitted from the server apparatus 2 is captured into the CPU 22 sequentially via the terminal adapter section 25 and bus 21.

The CPU 22 actually reads a working program stored in ROM 24 into RAM 23 in the case where the image data D2 brought by the user is read from the recording medium through the drivers corresponding to various recording media of the media unit section 12 or the image data D3 brought by the user is directly input from the digital still camera etc. via the video capture board 19A, scanner 19B and digital interface circuit 19C of the image data input section 19, or the server image data D4 is received from the server apparatus 2 via the terminal adapter section 25, and at the same time the command S1 is given from the user via the touch panel 11AT.

Then, the CPU 22 starts operation processing based on this working program, reads operation image data D1 indicating printing, recording or transmission content and procedure from ROM 24 according to the command S1 from the user and supplies the operation image data D1 to the monitor 11A via the bus 21 and interface circuit 20 sequentially.

At this time, the CPU 22 temporarily records all the image data D2 brought by the user captured from the recording medium inserted into the media unit section 12, the image data D3 brought by the user input via the video capture board 19A, scanner 19B and digital interface circuit 19C of the image data input section 19 or the server image data D4 transmitted from the server apparatus 2 in the hard disk apparatus 26 to take a backup copy. By the way, the recording medium inserted into the media unit section 12 at this time is taken out by the user after the backup.

Furthermore, when the user deposits bills or coins through the money slot (not shown), the CPU 22 controls the billing section 16. That is, the billing section 16 includes the bill identification section 16A that identifies the type of bills and measures the number of bills by type and the coin identification section 16B that identifies the type of coins and measures the number of coins by type, and the billing control section 16C, under the control of the CPU 22, decides whether the sum total of the money deposited through the bill identification section 16A and coin identification section 16B equals or exceeds the value of the processing contents set by the user on the touch panel 11AT.

The billing control section 16C transmits the billing approval signal S2 to the CPU 22 only when the sum total of the money deposited equals or exceeds the value set on the touch panel 11AT and when the total money deposited exceeds the set value, ejects the difference through the money outlet (not shown) via the bill identification section 16A and coin identification section 16B.

Upon reception of the billing approval signal S2, the CPU 22 starts processing operation according to the processing content selected by the user. That is, in the case where the user selects printing processing, the CPU 22 controls either one of the first printer 14 or the second printer 15, which is loaded with printing media (post card, seal) corresponding to the printing content specified by the user, to start the printing operation, and in the case where the user selects recording processing, the CPU 22 controls the driver of the recording media corresponding to the recording content specified by the user of the media unit section 12 to start the image data recording operation.

Furthermore, in the case where the user desires many image prints or the user wants the images to be transmitted to the other end of communication in a remote place, etc., if transmission processing according to the user's operation is selected, the CPU 22 transmits the image data of the image specified by the user to the server apparatus 2 together with the ordering data D8 corresponding to the image data via the terminal adapter section 25, which is the circuit interfacing with the network 3.

This ordering data D8 comprises output destination specification data made up of the installation location and apparatus identification ID to specify the host print service apparatus PO₁ to POₙ to which the image data transmitted is to be output, print content data to specify the print content at the output destination (print size, number of prints, and print format to specify index print, multi-print, seal print or monochrome print, etc.), print out date and time specification data to specify printing date and time, payment specification data to specify how to pay fees billed according to the print content (cash payment, payment by credit card or bank transfers, etc.), and user identification data to identify the user made up of various information such as the user's name, address, phone number, bank or post office account number (hereinafter referred to as "user information") and the user-specific ID number.

Furthermore, the CPU 22 controls the receipt printer 13 based on this billing approval signal S2 and ejects a receipt (not shown) describing the printing content (image ID, number of images, etc.) and set fees according to this printing processing in the case where the user executes printing processing according to the selected processing content, the recording content (image ID etc.) and a receipt (not shown) describing the set fees according to this recording processing in the case where the user executes the recording processing, or the transmission content (image, transmission destination and reception number, etc.) and a receipt (not shown) describing the set fees according to this transmission processing in the case where the user executes transmission processing, from the receipt outlet (not shown).

By the way, the digital interface circuit 19C of the image data input section 19 is configured by so-called RS-232C etc. which is a serial interface circuit premised on a small computer system interface (SCSI), an Institute Electrical and Electronics Engineer (IEEE) 1284, an IEEE 1394 or communications by telephone line, and it is possible to directly capture image data via the digital interface circuit 19C from a digital still camera etc.

In the case of the first and second printers 14 and 15, it is possible to select a plurality of types of prints such as print size, index print, multi-print, seal print, monochrome print, post card print or special size print, etc.

The first and second printers 14 and 15 are loaded with their corresponding post cards, seals, etc. as printing media and in this way the first and second printers 14 and 15 print images based on the print data D5 according to the printing content specified by the user on post cards or seals and then transmit these printed images through the card outlet (not shown).

Furthermore, the media unit section 12 is loaded by the user with a recording medium (a memory stick, compact flash, smart media, floppy disk, compact disk or PC card, etc.) and their corresponding drivers record the recording image data D6 according to the recording content specified by the user in their respective recording media and then transmit this data from the media unit section 12.

Furthermore, of the images based on the image data D2 and D3 brought by the user and backed by the hard disk apparatus 26, the image data of the image selected by the user is transmitted to the server apparatus 2 via the terminal adapter section 25.

In this embodiment, each of the print service supply apparatuses PM₁ to PMₙ captures combined image (template image) data D7 of a plurality of types made up of a calendar frame to use an image selected by the user for a calendar etc. by accessing the server apparatus 2 or captures such a template image using the scanner 19B of the image data input section 19, records the image in the hard disk apparatus 26, and the CPU 22 reads the image according to the user's operation, and in this way it is possible to perform combination processing using these various template image data D7.

Thus, each of the print service supply apparatuses PM₁ to PMₙ can print on the spot, images based on the image data D2 brought by the user captured from recording media according to the user's operation, the image data D3 brought by the user input from a digital still camera, or the server image data D4 transmitted (or downloaded) from the server apparatus 2, record the image data D2, D3 brought by the user or server image data D4 in recording media or transmit the image data D2, D3 brought by the user to the server apparatus 2.

### (2-2) Configuration of print ordering apparatus

On the other hand, the print ordering apparatuses PN₁ to PNₙ are configured in the same way as for the print service supply apparatuses PM₁ to PMₙ (Fig. 2) except that the first and second printers 14 and 15 are omitted as illustrated in Fig. 4 with the same components as those in Fig. 2 assigned the same reference numerals.

In this case, the personal computer 10 is configured in the same way as for the personal computer 10 in Fig. 3 except that the CPU 22 reads from ROM 24, the image data D10 indicating the content and procedure of only the transmission according to the command S10 instead of the image data D1 indicating the content and procedure of printing, recording or transmission according to the command S1 given to the CPU 22 sequentially via the interface circuit 20 and bus 21 from the user, as illustrated in Fig. 5 with the same components as those in Fig. 3 assigned the same reference numerals.

The CPU 22 actually reads a working program stored in ROM 24 into RAM 23 in the case where the media unit section 12 is loaded with a recording medium and the image data D2 brought by the user is read by the driver corresponding to the recording medium or the image data D3 brought by the user is directly input from the digital still camera via the video capture board 19A, scanner 19B and digital interface circuit 19C of the image data input section 19, or the server image data D4 is received from the server apparatus 2 via the terminal adapter section 25 and at the same time the command S10 is given by the user via the touch panel 11AT.

Then, the CPU 22 starts operation processing based on this working program, reads operation image data D10 indicating the transmission content and procedure according to the command S10 from ROM 24 and supplies the operation image data D10 to the monitor 11A via the bus 21 and interface circuit 20 sequentially.

At this time, the CPU 22 temporarily records all the image data D2 brought by the user captured through the recording medium inserted into the media unit section 12, the image data D3 brought by the user input from the digital still camera via the video capture board 19A, scanner 19B and digital interface circuit 19C of the image data input section 19 or the server image data D4 transmitted from the server apparatus 2, in the hard disk apparatus 26 to take a backup copy. By the way, the recording medium inserted into the media unit section 12 at this time is taken out by the user after the backup.

Then, the image data of the selected images based on the image data D2, D3 brought by the user and backed in the hard disk apparatus 26 is transmitted together with the ordering data D8 according to the image data to the server apparatus 2 via the terminal adapter section 25.

In this embodiment, each of the print ordering apparatuses PN₁ to PNₙ captures various template image data D7 by accessing the server apparatus 2 or captures various template images using the scanner 19B of the image data input section 19, records the images in the hard disk apparatus 26, and then the CPU 22 reads the images according to the user's operation, and in this way it is possible to perform combination processing using these various template image data D7.

Thus, each of the print ordering apparatuses PN₁ to PNₙ removes the first and second printers 14 and 15 from the print service supply apparatuses PM₁ to PMₙ and dedicates to only transmission processing of transmitting the image data D2 brought by the user captured from recording media according to the user's operation and the image data D3 brought by the user input from the digital still camera to the server apparatus 2 (that is, an apparatus dedicated to transmission of image data), which makes it possible not only to reduce the size of the entire apparatus and reduce the installation area but also, when the only purpose of the user is transmission processing, to speed up the transmission processing because of the absence of selection operation from a plurality of processes such as printing and recording processes compared to the print service supply apparatuses PM₁ to PMₙ, etc.

### (2-3) Configuration of host print service apparatus

On the other hand, the host print service apparatuses PO₁ to POₙ are configured in the same way as for the print service supply apparatuses PM₁ to PMₙ except that the first and second printers 14 and 15 are replaced by a high-speed printer 30 as illustrated in Fig. 6 with the same components as those in Fig. 2 assigned the same reference numerals.

Furthermore, the personal computer 10 is configured in the same way as for the personal computer 10 in Fig. 3 except that the server image data D4 and corresponding ordering data D8 are given from the server apparatus 2 via the terminal adapter 25 and bus 21 sequentially, as illustrated in Fig. 7 with the same components as those in Fig. 3 assigned the same reference numerals.

In this case, the high-speed printer 30 can select the print size and a plurality of types of prints such as index print, multi-print, seal print, monochrome print, post card print or special size print, etc.

Moreover, this high-speed printer 30 is loaded with printing media such as post card, seal, etc., and in this way the high-speed printer 30 prints the image based on the server image data D4 supplied from the server apparatus 2 and printing data D5 according to the printing content specified by the user by the ordering data D8 on a post card or seal at high speed and then transmits the printed image through the card outlet (not shown).

Thus, each of the host print service apparatuses PO₁ to POₙ can print at high speed, the image based on the server image data D4 transmitted from the server apparatus 2 according to the user's operation, the image data D2 brought by the user captured from recording media or the image data D3 brought by the user input from the digital still camera.

Therefore, when large-volume prints are required, the user can make large-volume prints at high speed by preferentially using these host print service apparatuses PO₁ to POₙ.

### (2-4) Configuration of server apparatus

The server apparatus 2 is configured, as shown in Fig. 8, by a personal computer 40, a display section 41 made up of a monitor 41A, a power supply section 42, a large-scale auxiliary storage apparatus 43 (hereinafter referred to as "large-volume memory 43") that stores customer data and server image data D4, and an operation section 44 made up of a mouse and keyboard, etc.

The personal computer 40 is configured, as shown in Fig. 9, by a CPU 45, a RAM 46, a ROM 47, a terminal adapter section 48 for the network 3 (intranet), a terminal adapter section 49 for the network 4 (internet) and an interface circuit 50, all of which are mutually connected via a bus 51.

Based on a predetermined operation program stored in the ROM 47, the CPU 45 captures a print request or image save request based on the image data D2, D3 brought by the user given via the network 3 from each of the print service supply apparatuses PM₁ to PMₙ and each of the print ordering apparatuses PN₁ to PNₙ and the corresponding ordering data D8, a registration request and a request for downloading template image data given via the network 3 from the host print service apparatuses PO₁ to POₙ in addition to the print service supply apparatuses PM₁ to PMₙ and each of the print ordering apparatuses PN₁ to PNₙ, a request for downloading the server image data D4, via the terminal adapter section 48 and the bus 51 sequentially, and furthermore a request for downloading the template image data given via the network 4 from each of the client computer PC₁ to PCₙ, a registration request and a request for downloading the server image data D4 (browsing request) via the terminal adapter section 48 and the bus 51 sequentially.

In this case, the CPU 45 captures the image data D2, D3 brought by the user transmitted via the network 3 from each of print service supply apparatuses PM₁ to PMₙ and each of the print ordering apparatuses PN₁ to PNₙ and the corresponding ordering data D8 via the terminal adapter section 48 and the bus 51 sequentially and then reads the working program stored in the ROM 47 into the RAM 46.

Then the CPU 45 starts operation processing based on this working program, accesses the host print service apparatuses PO₁ to POₙ specified by the user based on this ordering data D8 via the terminal adapter section 48 and the network 3 sequentially, checks the order based on the ordering data D8, and in the case where this result shows that there is no inconvenience on the side of the host print service apparatuses PO₁ to POₙ (when these host print service apparatuses PO₁ to POₙ are jammed with other orders or malfunctioning, etc.), confirms this order with the host print service apparatuses PO₁ to POₙ.

In this way, the CPU 45 transmits the image data according to this ordering data D8 to the corresponding host print service apparatuses PO₁ to POₙ as the server image data D4 via the bus 51 and terminal adapter section 48 and instructs the image to be printed based on the confirmed order.

The CPU 45 issues a specific ID number according to the user, who is the orderer of the ordering data D8 based on this ordering data D8, arranges the customer list of the user created according to this ID number based on the ordering data D8, transmits the customer list and a control image list created based on the corresponding image data D2 or D3 brought by the user to the large-volume memory 43 via the bus 51 and interface circuit 50 sequentially, and adds these lists to the customer control information and image control information which are their respective databases as customer data and server image data.

The customer list stored in the customer control information as this customer data includes the user's personal information (name, address, phone number, etc.), the specific ID number, billing information (claimed sum, payment method, etc.) issued for the user and used to read this customer list, utilization history (limited to repeater users only) and preference information (type of a digital still camera owned by the user, type of recording media used, etc.).

On the other hand, the control image list stored in the image control information as the server image data includes this user ID number, the reception number, transfer date and time, image storage period to read this control image list issued for every service requested by the user, information such as the location and registration number, etc. of the print service supply apparatuses PM₁ to PMₙ or the print ordering apparatuses PN₁ to PNₙ on the ordering side and the output side and claimed/payment sums, etc.

Then, the CPU 45 stores this server image data for a period specified by the user or for a preset period and controls users based on the customer data of each user created in this way.

When the user uses this print system 1 again, this allows the CPU 45 to control so that the processing content previously used by the user is preferentially applied to the corresponding print service supply apparatuses PM₁ to PMₙ or print ordering apparatuses PN₁ to PNₙ, according to the reception number, ID number and password, etc. based on the customer data, further simplify these operations and improve convenience for the user.

By connecting a printer (not shown) via the interface circuit 50 as required, the CPU 45 is also allowed to print this customer data and a print reservation list IP indicating the reception number, reservation date and time, printing situation (already printed or not) and delivery situation (already delivered or not) as shown in Fig. 10 based on the customer data.

When a request for downloading the server image data D4 is given from the print service supply apparatuses PM₁ to PMₙ or the print ordering apparatuses PN₁ to PNₙ via the terminal adapter section 48 and bus 51 sequentially, the CPU 45 further reads the working program stored in the ROM 47 into the RAM 46 to start operation processing and compare the password based on the download request and password of the customer data.

When these passwords match, the CPU 45 reads the server image data D4 according to this download request from the large-volume memory 43 and transmits the server image data D4 to the print service supply apparatuses PM₁ to PMₙ or the print ordering apparatuses PN₁ to PNₙ via the interface circuit 50, bus 51 and the terminal adapter section 48 sequentially.

On the other hand, the CPU 45 transmits the template image data D7 already stored in the ROM 47 at predetermined intervals to the print service supply apparatuses PM₁ to PMₙ, the print ordering apparatuses PN₁ to PNₙ and host print service apparatuses PO₁ to POₙ via the bus 51 and terminal adapter section 48 sequentially, and in the case where a request for downloading the template image data D7 is given from the print service supply apparatuses PM₁ to PMₙ, print ordering apparatuses PN₁ to PNₙ and host print service apparatuses PO₁ to POₙ, via the terminal adapter section 48 and the bus 51 sequentially, the CPU 45 starts operation processing by reading the working program stored in the ROM 47 into the RAM 46, reads the template image data D7 from the ROM 47 and transmits the template image data D7 via the bus 51 and terminal adapter section 48 sequentially.

In addition to such a configuration, when a service request such as a request for browsing the server image data D4 or a request for downloading the template image data D7 is given from each of the client computer PC₁ to PCₙ, over the internet 4 via the terminal adapter section 49 and the bus 51 sequentially, the CPU 45 starts operation processing by reading the working program stored in the ROM 47 into the RAM 46, compares the password for accessing the client computer PC₁ to PCₙ, and when this password matches the pre-stored password for accessing, the CPU 45 executes the service request from each of the client computer PC₁ to PCₙ.

Then, the CPU 45 reads the corresponding server image data D4 requested by the client computer PC₁ to PCₙ from the large-volume memory 43 and transmits the server image data D4 to the corresponding client computer PC₁ to PCₙ via the interface circuit 50, bus 51 and terminal adapter section 49 sequentially over the internet 4.

Furthermore, the CPU 45 reads from the ROM 47 the template image data D7 requested by the client computer PC₁ to PCₙ to be downloaded and transmits the template image data D7 to the corresponding client computer PC₁ to PCₙ via the interface circuit 50, bus 51 and terminal adapter section 49 sequentially over the internet 4.

Thus, the server apparatus 2 controls the image data supplied from the print service supply apparatuses PM₁ to PMₙ and the print ordering apparatuses PN₁ to PNₙ based on the corresponding ordering data, and thereby can transmit the image data as the server image data D4 to the host print service apparatuses PO₁ to POₙ specified by the user, print or record the image data in recording media, and transmit the server image data D4 to the print service supply apparatuses PM₁ to PMₙ and the print ordering apparatuses PN₁ to PNₙ according to the request.

Furthermore, the server apparatus 2 creates a customer list based on the supplied ordering data D8 and controls this as the customer data and thereby controls users so that when the same user reuses this print system 1, the user can preferentially execute the services used previously more than other services.

### (3) Print Ordering/Delivery Procedure in Print System

Here, on the print ordering side made up of the print service supply apparatuses PM₁ to PMₙ or the print ordering apparatuses PN₁ to PNₙ in this print system 1, an initial screen PFO as shown in Fig. 11 is actually displayed on the monitor 11A of the display section 11, and when the user touches the touch panel 11AT of the monitor 11A, the CPU 22 of the print service supply apparatuses PM₁ to PMₙ or the print ordering apparatuses PN₁ to PNₙ starts the print ordering/delivery procedure RT1 shown in Fig. 12 to Fig. 15 from step SPO and executes a service request selected and specified by the user from among printing of the image based on the image data stored in various recording media brought by the user and server apparatus 2, recording in the various recording media, requesting to store in the server apparatus 2 (image data of various recording media only) and print ordering to the host print service apparatuses PO₁ to POₙ, etc. based on the print ordering/delivery procedure RT1.

That is, when the user touches the initial screen PFO displayed on the monitor 11A via the touch panel 11AT, the CPU 22 starts the print ordering/delivery procedure RT1 from step SPO, moves to the next step SP1 and displays on the monitor 11A a registered customer selection screen (not shown) to allow the user to select whether the user is a registered customer for the desired service request or not and decides whether the user must be the registered customer or not.

When the user selects that the user need not be the registered customer for the desired request on the registered customer selection screen in this step SP1, the CPU 22 obtains a negative result indicating that the user need not be the registered customer and moves on to the next step SP2.

In this step SP2, the CPU 22 displays a customer number reception screen (not shown) on the monitor 11A, instructs the user who has an experience of using this print system 1 (hereinafter referred to as "existing customer") to enter an ID number, thereby accesses the server apparatus 2, searches the user's customer data based on this ID number and acquires the utilization history (past service information) of the user according to the customer list based thereon.

At this time, in step SP3, when the CPU 45 is accessed by the CPU 22 of the print service supply apparatus PM₁ to PMₙ or the print ordering apparatus PN₁ to PNₙ and thereby a customer number is given, the server apparatus 2 searches the past service information of the user based on the customer number from the large-volume memory 43 and transmits the past service information to the corresponding print service supply apparatus PM₁ to PMₙ or print ordering apparatus PN₁ to PNₙ.

This past service information of the user includes the type of the digital still camera and recording media thereof used by the user, preference information (preference for color adjustment, type of target, etc.), etc. and using this information allows the user, when using the print service supply apparatus PM₁ to PMₙ or print ordering apparatus PN₁ to PNₙ again, to preferentially display a GUI screen suited to the user-specific filming environment or preferentially set adjustment parameters of images to be printed, thus making it possible to save the time and trouble in operations such as the user-specific image adjustment, simplify the GUI screen operation procedure and provide improved convenience to repeater users.

Using, from among this past service information of the user, information on the digital still camera used by the user, information on the installation location of the print service supply apparatus PM₁ to PMₙ and print ordering apparatus PN₁ to PNₙ will allow companies which are seeking publicity activities to select all or specific users, display such users new product information such as digital still cameras, image recording media and related software, etc. on the monitor 11A taking advantage of a print wait time, etc., print the advertisement contents including, if necessary, discount tickets or coupons from the printer of the print service supply apparatus PM₁ to PMₙ and announce the advertisement contents. This not only allows the companies seeking such publicity activities to effectively and directly advertise but also allows operators running the print service supply apparatus PM₁ to PMₙ or print ordering apparatus PN₁ to PNₙ to receive incomes as part of advertisement fees from the companies.

Then, the CPU 22 moves on to step SP4 and displays an operation selection screen PF1A configured by icons IC1 and IC3 indicating a menu of various services such as "Print now" and "Save to recording media" as shown in Fig. 16 on the monitor 11A.

At this time, for the print ordering apparatus PN₁ to PNₙ whose printing function is omitted, the CPU 22 displays an operation selection screen (not shown) configured by almost the same configuration as that of the operation selection screen PF1A in Fig. 16 on the monitor 11A without the icon IC1 indicating the service menu "Print now."

In step SP4, when the user selects either one of icon IC1 or IC3 on the operation selection screen PF1A, the CPU 22 moves on to the next step SP5, displays icons IC5 and IC6 indicating whether or not to combine images in a service request selected as shown in Fig. 17 on the monitor 11A as a template setting screen PF2 and decides whether or not to combine images.

In this step SP5, if the icon IC5 is selected from the template setting screen PF2, the CPU 22 obtains an affirmative result meaning that images will be combined, moves on to step SP6, displays a template image input selection screen (not shown) to select a template image input method on the monitor 11A, and if the user selects an icon indicating that the template image will be downloaded from the server apparatus 2 on the template image input selection screen and the CPU 22 thereby obtains an affirmative result, the CPU 22 moves on to step SP7.

In this step SP7, the CPU 22 accesses the server apparatus 2 and requests downloading of the template image. With this on the server apparatus 2, in step SP8, the CPU 45 receives the request for downloading the template image given from the CPU 22 of the print service supply apparatus PM₁ to PMₙ or print ordering apparatus PN₁ to PNₙ, moves on to the next step SP9, searches image data D7 of the requested template image from the large-volume memory 43, transmits this image data D7 through the interface circuit 50, bus 51 and terminal adapter section 48 sequentially, then transmits the image data D7 to the corresponding print service supply apparatus PM₁ to PMₙ or print ordering apparatus PN₁ to PNₙ via the intranet.

Then, in step SP10, the CPU 22 receives the template image data D7 transmitted from the server apparatus 2, and if the user selects one from among a plurality of template images based on the template image data D7 acquired in this way, the CPU 22 temporarily stores the template image data D7 in the RAM 23 so as to use this template image for image combination in subsequent services and moves on to step SP11.

On the other hand, if the CPU 22 receives a negative result on the template image input selection screen in step SP6 by the user selecting the icon indicating that the template image will be input via a dedicated recording medium or the image data input section 19, the CPU 22 moves on to step SP12.

Then, in step SP12, when the user inserts the dedicated recording medium in which the template image data D7 is recorded into the media unit section 12, the CPU 22 captures the template image or captures the template image via the scanner 19B of the image data input section 19, and then if the user selects one of the plurality of template images acquired in this way, the CPU 22 temporarily stores this template image data D7 in the RAM 23 and moves on to step SP11.

On the other hand, if the icon IC6 is selected on the template setting screen PF2 in step SP5 and the CPU 22 obtains a negative result indicating that images will not be combined, the CPU 22 moves on to step SP11.

Then, in this step SP11, the CPU 22 displays on the monitor 11A, an image input selection screen PF3A configured by icons IC7 to IC12 corresponding to the types of recording media (memory stick, compact flash, smart media, floppy disk, compact disk and PC card) as the method of inputting image data as shown in Fig. 18 and icon IC13 corresponding to "direct input" indicating that image data should be input directly from a digital still camera, etc. via the image data input section 19 and decides whether or not to input the image data from recording media.

In this step SP11, if the user selects, for example, an icon (PC card IC12, etc.) corresponding to a recording medium on the image input selection screen PF3A displayed on the monitor 11A and the CPU 22 thereby obtains an affirmative result, the CPU 22 moves on to SP13 and displays on the monitor 11A, a message PF4 "Insert recording medium (PC card)" corresponding to the icon IC12 shown in Fig. 19.

Then, when the recording medium selected by the user is inserted into the media unit section 12, the CPU 22 loads the image data D2 recorded in the PC card by controlling the corresponding drive in the media unit section 12, temporarily records all the image data D2 in the hard disk apparatus 26 to have a backup copy. At this time, the CPU 22 displays a message indicating that the current data is being read as a message PF5 on the monitor 11A as shown in Fig. 20.

On the other hand, in step SP11, if the user selects the icon IC13 corresponding to "Direct input" on the image input selection screen PF3A displayed on the monitor 11A, the CPU 22 moves on to step SP15 and displays on the monitor 11A, a message "Input image" (not shown) corresponding to the icon IC13 with almost the same configuration as that of Fig. 19.

In this case, if the user connects a digital still camera (not shown) to the video capture board 19A or loads the scanner 19B with a photo, etc. of the image to be input or connects a digital still camera to the digital interface circuit 19C, the CPU 22 reads the image data D3 input via the video capture board 19A, the scanner 19B or the digital interface circuit 19C, temporarily records the image data D3 in the hard disk apparatus 26 to have a backup copy. At this time, the CPU 22 displays on the monitor 11A a message indicating that the current data with almost the same configuration as that in Fig. 20 is being loaded.

Then, in this step SP13 or step SP15, when loading of the image data through the recording medium or image data input section 19 is completed, the CPU 22 displays on the monitor 11A a message indicating that a backup to the hard disk is completed or takes out a recording medium if the recording medium is loaded or takes out a photo if the scanner 19B is loaded with the photo or displays a message (not shown) indicating that a digital video camera or digital still camera should be removed if these are connected, and then moves on to step SP14.

In this step SP14, in the case where the CPU 22 of the print service supply apparatus PM₁ to PMₙ selects the icon IC1 or IC3 indicating "Print now" or "Record in recording medium," respectively or the CPU 22 of the print ordering apparatus PN₁ to PNₙ selects the icon IC3 indicating "Record in recording media," the CPU 22 displays on the monitor 11A a print image selection screen PF6 as shown in Fig. 21 corresponding to the icon IC1 or a recording image selection screen (not shown) corresponding to the icon IC3 with almost the same configuration as that in Fig. 21.

By the way, in the case of the print ordering apparatus PN₁ to PNₙ since its printing function is omitted as described above, the following printing processing is omitted.

This print image selection screen PF6 and recording image selection screen display a plurality of images based on the input image data as thumbnail images TNA1 to TNA10, a predetermined number (e.g., 10) thereof at a time. Below the thumbnail images TNA1 to TNA10 are operation buttons CB1 to CB4 to arbitrarily select all images. The buttons CB1 and CB2 are buttons to shift to previous or next 10 thumbnail images, the button CB3 is a button to select all images and the button CB4 is a button to confirm the selections of these images.

In this way, when the user selects all desired images from among the plurality of thumbnail images TNA1 to TNA10 displayed on the monitor 11A, the CPU 22 displays on the monitor 11A a print setting screen PF7 as shown in Fig. 22 or a recording setting screen (not shown) with almost the same configuration as the PF7.

This print setting screen PF7 or the recording setting screen shows thumbnail images TNA1 to TNA10, one at a time, enlarged to a predetermined size inside the image frame PF7A in a predetermined size and displays a setting image PF7B to set the printing content (number of prints, rotation of image, adjustment of size) adjacent to the image frame PF7A.

This setting image PF7B displays an increment/decrement setting button SB1 to set the number of prints, a rotation button SB2 to rotate an image rightward or leftward in steps of 90°, a setting button SB3 to set whether or not to set and adjust the size of the image in accordance with the size of a printing medium, a button SB4 to confirm each setting, a format setting button SB5 to set a plurality of types of image file format and a switching button SB7 to switch to other setting screens (not shown) to perform image processing. Furthermore, above the setting image PF7B, a set fee according to the number of prints (number of image data pieces to be recorded) is displayed as a fee display image SM1.

For example, when the "Left" button of the rotation buttons SB2 is pressed, each of the thumbnails TNA1 to TNA10 in the image frame PF7A is rotated anticlockwise by 90° inside the image frame PF7A as shown in Fig. 23.

When the user presses the format setting button SB5 on this print setting screen PF7, the CPU 22 converts the image format of each of the thumbnails TNA1 to TNA10 shown in the image frame PF7A to a format like joint photographic coding experts group (JPEG), Tagged Image File (TIF) or Quick Draw Picture Format (PICT), etc.

Furthermore, when the user presses the switching button SB7 on this print setting screen PF7, the CPU 22 changes the setting image PF7B to an image processing selection screen (not shown) to select a plurality of types of image processing (e.g., color adjustment processing, gamma adjustment processing, trimming processing, zooming processing, etc.) to be applied to the thumbnails TNA1 to TNA10 shown in the image frame PF7A. Then, the CPU 22 applies the image processing selected on this image processing selection screen to each of the thumbnails TNA1 to TNA10 shown in the image frame PF7A.

At this time, only in the case where an affirmative result is obtained in step SP5, the CPU 22 performs combination processing on the thumbnails TNA1 to TNA10 shown in the image frame PF7A using the template image selected in step SP10 or SP12.

Then, when the user confirms that the printing contents are set for all the selected thumbnails TNA1 to TNA10, the CPU 22 displays on the monitor 11A a fee set according to the number of prints of the printing medium (post card, seal) selected by the user as shown in Fig. 24 as a charging screen PF8.

Then, when the billing control section 16C decides that the user has deposited money (bills and/or coins) exceeding the set fee through the money slot, the CPU 22 controls the first or the second printer 14 or 15, which is loaded with the user-specified printing medium to start printing operation in the case where the icon IC1 is selected in step SP4.

At this time, in the case where the icon IC3 is selected in step SP4, the CPU 22 displays on the monitor 11A a recording setting screen PF9 shown in Fig. 25.

This recording setting screen PF9 shows not only thumbnail images enlarged to a predetermined size, one at a time, but also a setting image PF9A to set the recording content adjacent to these thumbnail images. This setting image PF9A is provided with a format setting button SB5 similar to that in the setting image PF7B on the above-described print setting screen PF7 and a recording button SB6 to execute recording.

Then, after confirming that the user has set recording contents for all thumbnail images, the CPU 22 displays on the monitor 11A the fee, which is set according to the recording contents selected by the user as a charging screen (not shown) with almost the same configuration as that in Fig. 24.

Then, when the billing control section 16C decides that the user has deposited money (bills and/or coins) exceeding the set fee through the money slot, the CPU 22 displays on the monitor 11A a message "Insert recording medium (e.g., floppy disk) (not shown).

Then, when the user inserts a floppy disk into the media unit section 12, the CPU 22 controls the corresponding driver in the media unit section 12 to start recording operation with the recording content set by the user.

Then, when the first or the second printer 14 or 15 completes the printing operation or the corresponding driver in the media unit section 12 completes the recording operation, the CPU 22 displays on the monitor 11A the difference between the sum of the money deposited and the set fee based on the decision of the billing control section 16C together with a message "Printing is completed" as a print completion screen PF10 as shown in Fig. 26 or as a recording completion screen (not shown) with almost the same configuration as that in Fig. 26 together with a message "Recording completed. Remove floppy disk" on the monitor 11A.

At the same time, the CPU 22 controls the billing section 16 to clear the account by ejecting the change from the fee outlet and after confirming that the user removes the printed printing medium or floppy disk, the CPU 22 issues a receipt by giving a receipt issuance signal S3 to issue a receipt to the receipt printer 13 according to the user's request and ejects the receipt from the fee outlet.

Then, the CPU 22 moves on to step SP16 and transmits the service information of the user based on this service to the server apparatus 2 as the sales information, moves on to step SP17 and finishes this print ordering/delivery processing procedure RT1.

On the other hand, the server apparatus 2 receives the sales information transmitted from the CPU 22 of the print service supply apparatus PM₁ to PMₙ or print ordering apparatus PN₁ to PNₙ in step SP18 and updates the customer data for user control stored in the large-volume memory 43 based thereon.

In response to this, when the user selects that the user must be a registered customer to receive the desired service request on the registered customer selection screen in step SP1 and the CPU 22 receives an affirmative result indicating that the user must be a registered customer, the CPU 22 moves on to step SP19.

Then, in this step SP19, the CPU 22 displays on the monitor 11A an existing customer confirmation screen (not shown) to confirm whether the user is an existing customer or not and decides whether the user is an existing customer or not.

This existing customer confirmation screen is configured by an ID number input section to input a specific ID number given to an existing customer, an ID number display section to display the ID number input via the ID number input section and a user registration selection section to allow unregistered user to select user registration.

When the user inputs the ID number via the ID number input section on this existing customer confirmation screen and the CPU 22 thereby obtains an affirmative result in this step SP19, the CPU 22 moves on to the next step SP20, accepts the ID number input and moves to the next step SP21.

Then, in this step SP21, the CPU 22 accesses the server apparatus 2, acquires past service information of the user based on this ID number and moves to the next step SP22.

At this time, in step SP23, the server apparatus 2 searches the past service information of the user according to the ID number from the large-volume memory 43 based on the ID number given when accessed by the print service supply apparatus PM₁ to PMₙ or print ordering apparatus PN₁ to PNₙ and transmits this past service information.

On the other hand, in step S19, if the CPU 22 receives a negative result by the user selecting the user registration selection section of the existing customer confirmation screen, the CPU 22 moves on to step SP24, displays a customer registration screen (not shown) to register a new customer on the monitor 11A and moves on to the next step SP25.

In this step SP25, the CPU 22 creates user identification data based on various user information input and set by the user according to the customer registration screen and transmits the user identification data to the server apparatus 2, and then moves on to step SP22.

At this time, in step SP26, the CPU 45 of the server apparatus creates a customer list based on the user identification data transmitted from the CPU 22 of the print service supply apparatus PM₁ to PMₙ or print ordering apparatus PN₁ to PNₙ and adds this customer list to the customer data.

In step SP22, the CPU 22 displays on the monitor 11A an operation selection screen PF1B shown in Fig. 27 configured in almost the same way as for the operation selection screen PF1A in Fig. 16, with icons IC2 and IC4 indicating various service menus such as "Store in server apparatus" and "Order print" in addition to the icons IC1 and IC3 of the operation selection screen PF1A.

At this time, in the case of the print ordering apparatus PN₁ to PN_{n,} since its printing function is omitted, the CPU 22 displays on the monitor 11A an operation selection screen (not shown) configured in almost the same way as for the operation selection screen PF1B in Fig. 27, configured without the icon IC1 indicating "Print now" service menu.

Then, in step SP22, when the user selects one of the icons IC1 to IC4 from the operation selection screen PF1B, the CPU 22 moves on to the next step SP23 and displays on the monitor 11A a template setting screen PF2 as shown in Fig. 17 and decides whether images should be combined or not.

In this step SP27, if the icon IC5 of the template setting screen PF2 is selected, the CPU 22 obtains an affirmative result indicating that images will be combined, moves on to step SP28, displays on the monitor 11A a template image input selection screen to select a template image input method, and if the CPU 22 obtains an affirmative result by the user selecting the icon indicating that the template image will be downloaded from the server apparatus 2 on the template image input selection screen, the CPU 22 moves on to step SP29.

In this step SP29, the CPU 22 accesses the server apparatus 2 and requests downloading of the template image. In response to this, in step SP30, the CPU 45 of the server apparatus 2 accepts the request for downloading the template image given from the CPU 22 of the print service supply apparatus PM₁ to PMₙ or print ordering apparatus PN₁ to PNₙ and moves on to the next step SP31, searches the image data D7 of the requested template image from the large-volume memory 43 and transmits this image data D7 through the interface circuit 50, bus 51 and terminal adapter section 48 and then transmits to the print service supply apparatus PM₁ to PMₙ or print ordering apparatus PN₁ to PNₙ via the intranet.

Then, the CPU 22 receives the template image data D7 transmitted from the server apparatus 2 in step SP32 and if the user selects one of a plurality of template images based on the template image data D7 acquired in this way, the CPU 22 temporarily stores the image data 7 of this template image in the RAM 23 so that the template image is used in image combination in subsequent services and moves on to step SP33.

On the other hand, in step SP28, in the case where the user selects the icon indicating that the template image will be entered via a dedicated recording medium or the image data input section 19 on the template image input selection screen and the CPU 22 obtains a negative result, the CPU 22 moves on to step SP34.

Then, in this step SP34, when the user captures the template image by loading the media unit section 12 with a dedicated recording medium in which the template image data D7 is recorded or captures the template image via the scanner 19B of the image data input section 19, and then selects one of the plurality of template images acquired in this way, the CPU 22 temporarily stores the image data D7 of this template image in the RAM 23 and moves on to step SP33.

In this step SP33, the CPU 22 displays on the monitor 11A an image input selection screen PF3B shown in Fig. 28 configured in almost the same way as for the image input selection screen PF3A shown in Fig. 18 with an icon IC14 corresponding to "Download" that indicates that image data will be downloaded from the server apparatus 2, in addition to the icons IC7 to IC13 of the image input selection screen PF3A and decides whether the image data is input from the recording medium or via the image data input section 19 or not.

In this step SP33, when the user selects, for example, the icon (PC card IC12, etc.) corresponding to the recording medium from the image input selection screen PF3B or the icon IC13 corresponding to the image data input section 19 and the CPU 22 thereby obtains an affirmative result, the CPU 22 moves on to step SP35 and decides whether the selected image data is entered from the recording medium or not.

Then, in this step SP35, when the CPU 22 obtains an affirmative result indicating that the image data is entered from the recording medium (that is, when one of the icons IC7 to IC12 is selected on the image input selection screen PF3B), the CPU 22 moves on to the next step SP36 and displays a message PF4 (Fig. 19) on the monitor 11A.

Then, if the recording medium selected by the user is inserted into the media unit section 12, the CPU 22 loads the image data D2 recorded in the PC card by controlling the corresponding driver in the media unit section 12 and makes a backup copy by temporarily recording all the image data D2 in the hard disk apparatus 26. At this time, the CPU 22 displays a message PF5 (Fig. 20) on the monitor 11A.

On the other hand, in step SP35, if the CPU 22 obtains a negative result indicating that the image data is entered via the image data input section 19 (that is, the icon IC13 is selected on the image input selection screen PF3B), the CPU 22 moves on to step SP38 and displays on the monitor 11A a message (not shown) "Enter image" corresponding to the icon IC13 with almost the same configuration as that of the message PF4 (Fig. 19).

In this case, if the user connects a digital still camera (not shown) to the video capture board 19A, loads the scanner 19B with a photo, etc. of the image to be input or connects a digital still camera to the digital interface circuit 19C, the CPU 22 loads the image data D3 entered by this video capture board 19A, scanner 19B or digital interface circuit 19C and makes a backup copy by temporarily recording all the image data D3 in the hard disk apparatus 26. At this time, the CPU 22 displays on the monitor 11A a message (not shown) "Loading data..." with almost the same configuration as the message PF5 (Fig. 20).

On the other hand, in step SP33, in the case where the user selects the icon IC14 corresponding to "Download" from the image input selection screen PF3B displayed on the monitor 11A, the CPU 22 moves on to SP39 and displays on the monitor 11A a reception number input screen PF11 to input and set the reception number to download the target image corresponding to the icon IC14 as shown in Fig. 29.

This reception number input screen PF11 is provided with a number input section NB1 made up of buttons numbered "0" to "9" and a number display section SN1 to display, for example, an 18-digit reception number input via the number input section NB1, and when the user inputs a predetermined number via the number input section NB1 and thereby the reception number is input and set, then the CPU 22 displays on the monitor 11A a secret number input screen PF12 as shown in Fig. 30.

This secret number input screen PF7 is provided with a number input section NB1 and a number display section SN2 to display a secret number, for example, as a 4-digit password for security input via the number input section NB1 and when the user enters a predetermined number via the number input section NB2 and thereby the secret number is input and set, the CPU 22 moves on to the next step SP40.

In this step SP40, the CPU 22 transmits the reception number and secret number entered and set by the user to the server apparatus 2 and requests that the image data corresponding to the reception number and secret number be downloaded.

In step SP41, when the CPU 45 of the server apparatus 2 receives the reception number and secret number transmitted from the print service supply apparatus PM₁ to PMₙ or print ordering apparatus PN₁ to PNₙ, the CPU 45 moves on to the next step SP42 and authenticates the received reception number and secret number.

Then, in this step SP42, the CPU 45 decides whether the reception number and secret number transmitted from the print service supply apparatus PM₁ to PMₙ or print ordering apparatus PN₁ to PNₙ are registered in the customer data or not and if the CPU 45 obtains an affirmative result indicating that these are registered in the customer data, the CPU 45 moves on to the next step SP43 and searches the corresponding image data from the large-volume memory 43 and transmits (downloads) the image data to the corresponding print service supply apparatus PM₁ to PMₙ or print ordering apparatus PN₁ to PNₙ as server image data D4.

Then, in step SP44, when the CPU 22 of the print service supply apparatus PM₁ to PMₙ or print ordering apparatus PN₁ to PNₙ receives the downloaded server image data D4, the CPU 22 loads the server image data D4 and makes a backup copy thereof by temporarily recording all the server image data D4 in the hard disk apparatus 26. At this time, the CPU 22 displays on the monitor 11A a message (not shown) "Loading data ..." with almost the same configuration as that of the message PF5 (Fig. 20).

Then, in these steps SP36, SP38 and SP44, when loading of the image data from the recording media, the image data input section 19 or the server apparatus 2 is completed, the CPU 22 displays on the monitor 11A a message indicating that a backup to the hard disk 26 is completed or takes out a recording medium if the recording medium is inserted or takes out a photo if the scanner 19B is loaded with the photo or displays a message (not shown) indicating that a digital video camera or digital still camera should be removed if these are connected to the video capture board 19A or the digital interface circuit 19C and then moves on to step SP37.

Then, in this step SP37, the CPU 22 decides whether the user has selected the icon IC2 on the operation selection screen PF1B in the preceding step SP22 or not and in the case where the CPU 22 receives a negative result by the user having selected the icon IC1, IC3 or IC4 on the operation selection screen PF1B, the CPU 22 moves on to step SP45.

In this step SP45, in the case where the icon IC1 is selected on the operation selection screen PF1B in the preceding step SP22, the CPU 22 displays a print screen selection screen PF6 (Fig. 21) corresponding to the icon IC1 on the monitor 11A.

Thus, in the case where the user selects all desired images from among the plurality of thumbnail images TNA1 to TNA10 displayed on the monitor 11A, the CPU 22 displays a print setting screen PF7 (Fig. 22) or a recording setting screen (not shown) with almost the same configuration as that of PF7 on the monitor 11A.

Then, the CPU 22 applies various print contents (number of prints, rotation and size adjustment of images, etc.) set by the user on this print setting screen PF7 or format conversion, image processing (color adjustment processing, gamma adjustment processing, trimming processing and zooming processing, etc.), etc. to the thumbnail images TNA1 to TNA10 selected by the user.

At this time, only in the case of obtaining an affirmative result in step SP27, the CPU 22 applies combination processing to the thumbnail images TNA1 to TNA10 selected by the user using the template image selected in step SP32 or SP34.

Then, when the CPU 22 confirms that the print content has been set for all the thumbnail images TNA1 to TNA10 selected by the user, the CPU 22 displays a fee, which is set according to the number of prints of the printing medium (post card, seal) selected by the user on the monitor 11A as a charging screen PF8 (Fig. 24).

Then, when the billing control section 16C decides that the user has deposited a sum of money (bills or coins) equal to or exceeding the set fee through the money slot, the CPU 22 starts printing operation by controlling the first or the second printer 14 or 15 loaded with the user-specified printing medium.

Then, when the printing operation by the first or the second printer 14 or 15 is completed, the CPU 22 displays the difference between the sum of the money deposited and the set fee based on the decision of the billing control section 16C on the monitor 11A as a print completion screen PF10 (Fig. 26) and ejects the printing medium on which the image selected by the user is printed from the print outlet (not shown).

At the same time, the CPU 22 controls the billing section 16 to clear the account by ejecting the change from the fee outlet, and then the CPU 22 issues a receipt by giving a receipt issuance signal S3 to issue a receipt according to the user's request to the receipt printer 13 and ejects the receipt from the fee outlet.

Then, the CPU 22 moves on to step SP46 and transmits the service information of the user based on this service to the server apparatus 2 as the sales information, moves on to step SP47 and finishes this print ordering/delivery processing procedure RT1.

On the other hand, the CPU 45 of the server apparatus 2 receives the sales information transmitted from the CPU 22 of the print service supply apparatus PM₁ to PMₙ or print ordering apparatus PN₁ to PNₙ in step SP48 and updates the customer data for user control stored in the large-volume memory 43 based thereon.

Furthermore, in step SP45, in the case where the icon IC3 has been selected in the previous step SP22, the CPU 22 displays on the monitor 11A a recording image selection screen (not shown) to select an image to be recorded in a recording medium with almost the same configuration as that of the print image selection screen corresponding to the icon IC3.

In this way, when the user selects all desired images from among the plurality of thumbnail images displayed on the monitor 11A, the CPU 22 displays on the monitor 11A a recording setting screen PF9 (Fig. 25) with almost the same configuration as that of the print setting screen PF7 (Fig. 22).

When the CPU 22 confirms that the user has set recording contents regarding all thumbnail images through this recording setting screen PF9 as in the case of the above-described various print contents, format conversion, image processing, etc., the CPU 22 displays on the monitor 11A a fee, which is set according to the recording content selected by the user as a charging screen (not shown) with almost the same configuration as that in Fig. 24.

Then, when the billing control section 16C decides that the user has deposited a sum of money (bills or coins) equal to or exceeding the set fee through the money slot, the CPU 22 displays a message (not shown) "Insert recording medium (e.g., floppy disk)" on the monitor 11A.

Then, when the user inserts a floppy disk into the media unit section 12, the CPU 22 controls the corresponding driver in this media unit section 12 to start recording the recording contents set by the user.

Then, when the recording operation by the corresponding driver in the media unit section 12 is completed, the CPU 22 displays the difference between the sum of the money deposited and the set fee based on the decision of the billing control section 16C on the monitor 11A as a recording completion screen (not shown) with almost the same configuration as that in Fig. 26.

At the same time, the CPU 22 controls the billing section 16 to clear the account by ejecting the change from the fee outlet, and after confirming that the user removes the floppy disk from the media unit section 12, the CPU 22 issues a receipt by giving a receipt issuance signal S3 to issue a receipt according to the user's request to the receipt printer 13 and ejects the receipt from the fee outlet.

Then, the CPU 22 moves on to step SP46 and transmits the service information of the user based on this service to the server apparatus 2 as the sales information, moves on to step SP47 and finishes this print ordering/delivery processing procedure RT1.

On the other hand, the CPU 45 of the server apparatus 2 receives the sales information transmitted from the CPU 22 of the print service supply apparatus PM₁ to PMₙ or print ordering apparatus PN₁ to PNₙ in step SP48 and updates the customer data for user control stored in the large-volume memory 43 based thereon.

Furthermore, in step SP45, in the case where the icon IC4 has been selected in the previous step SP22, the CPU 22 displays on the monitor 11A an ordering image selection screen PF13 as shown in Fig. 31 with almost the same configuration as the print image selection screen PF6 (Fig. 21) corresponding to the icon IC4.

This ordering image selection screen PF13 displays a predetermined number (e.g., 10) of images based on the input image data as thumbnail images TNB1 to TNB10. Below the thumbnail images TNB1 to TNB10, there are displayed buttons CB1, CB2 and CB4 from among operation buttons CB1 to CB4 to arbitrarily select all the above images.

Thus, when the user selects all desired images from among the plurality of thumbnail images TNB1 to TNB10 displayed on the monitor 11A, the CPU 22 creates provisional ordering data.

First, the CPU 22 displays on the monitor 11A an order destination selection screen PF14 to specify the host print service apparatus PO₁ to POₙ which becomes the order destination for prints of the images selected by the user as shown in Fig. 32.

This order destination selection screen PF14 displays the names of the administrative divisions of Japan and when the user selects a desired administrative division, the CPU 22 displays on the monitor 11A an order destination selection screen PF14B to select a city name as shown in Fig. 33.

This order destination selection screen PF14B displays the names of all cities in the selected administrative division, and when the user selects a desired city, then the CPU 22 displays on the monitor 11A an order destination selection screen PF14C to select from among the names and locations of shops in which the host print service apparatuses PO₁ to POₙ are installed as shown in Fig. 34.

This order destination selection screen PF14C displays the names and locations of all shops in the selected city in which the host print service apparatuses PO₁ to POₙ are installed. By operating these order destination selection screens PF14A to PF14C using the corresponding operation buttons CB1, CB2 and CB4 as required, the CPU 22 displays on the monitor 11A the location of the host print service apparatus PO₁ to POₙ which becomes the order destination selected by the user as an order destination confirmation screen 14D as shown in Fig. 35.

Then, when the user confirms the desired order destination on this order destination confirmation screen 14D and then confirms the selection using the selection confirmation button CB4, the CPU 22 registers the confirmed order destination in the hard disk apparatus 26.

By the way, in the case of this embodiment, the user selects and decides the order destination from among the names of the administrative divisions or the like shown on the order destination selection screens PF14A to PF14C, but the order destination selection method is not limited to this and it is also possible to specify a plurality of order destinations simultaneously, and moreover the convenience for the user can be improved if the user is allowed to select and specify the order destination by inputting characters in kana, etc.

Then, the CPU 22 displays a first print reservation screen PF15A as shown in Fig. 36 on the monitor 11A. This first print reservation screen PF15A is provided with a number input section NB3 to enter numbers "0" to "9" and a reservation date/time display section SN3 to display a desired date/time for the print to be finished entered via the number input section NB3.

When the user inputs and sets the desired date/time for the print to be finished (e.g., 15:00 on August 15, 1999) via the number input section NB3 on the first print reservation screen PF15A, the CPU 22 displays this as a second print reservation screen PF15B as shown in Fig. 37 on the monitor 11A.

This second print reservation screen PF15B is provided with a reservation date/time display section SN3, a reservation number display section YB1 to display the reservation number set according to the reservation and a message indicating that the reservation has been accepted. In this way, the CPU 22 allows the user to confirm the reservation date/time on this second print reservation screen PF15B.

Then, the CPU 22 displays a user information setting screen (not shown) to specify and enter the name, address and phone number of the user, a password that the user can set arbitrarily and the method of payment for the print fee (cash payment, transfers by financial institutions or card payment, etc.) on the monitor 11A.

In this way, the user fills in necessary items according to this user information setting screen. In the case where the user has selected transfers by financial institutions or card payment as the method of payment, the user enters the account number of the financial institution (e.g., bank or post office) to which the bill is charged and the membership number of the card used for payment. As a result, the CPU 22 sets, for example, an 8-digit membership number for the user.

By the way, such detailed user data entries are only necessary when the user uses this system for the first time. Once the user data is input, the CPU 22 transfers the user data to the server apparatus 2 and registers the user data in the large-volume memory 43. Then, when the user uses the system next time, the CPU 22 displays a user data input screen PF16 as shown in Fig. 38 on the monitor 11A.

This user data input screen PF16 is provided with a number input section NB3, a membership number display section SN4A to display the user-specific membership number via the number input section NB3 and a number display section SN4 made up of a password display section SN4B to display a 4-digit password for security entered via the number input section NB3 and the CPU 22 identifies the user based on the membership number and password entered by the user via the number input section NB3.

This password is arbitrarily set by the user on the user information setting screen when the user uses the system for the first time and is provided as a security means to prevent other unauthorized people from downloading the image data stored in the server apparatus 2.

In this step SP45, when the provisional ordering data for the user to order prints of desired images is created, the CPU 22 transmits this provisional ordering data to the server apparatus 2.

Thus, in step SP49, upon reception of the provisional ordering data D8 transmitted from the print service supply apparatus PM₁ to PMₙ or print ordering apparatus PN₁ to PNₙ, the CPU 45 of the server apparatus 2 checks the order content from this print service supply apparatus PM₁ to PMₙ or print ordering apparatus PN₁ to PNₙ based on the provisional ordering data D8.

Then, the CPU 45 moves on to the next step SP50 and stores the image data subject to a print order in the large-volume memory 43 based on the received provisional ordering data and stores the data as the customer data for a predetermined period of time and then moves on to the next step SP51.

Then, in this step SP51, the CPU 45 checks the host print service apparatus PO₁ to POₙ which is the order destination based on the provisional ordering data, then moves on to the next step SP52, provisionally orders the image print based on the provisional ordering data by accessing this host print service apparatus PO₁ to POₙ and checks whether this order for the image print with this order content (number of prints, desired date/time for the print to be finished) is acceptable or not.

Thus, in step SP53, the CPU 22 of the corresponding host print service apparatus PO₁ to POₙ carries out provisional ordering based on the provisional order for the image print requested by the server apparatus 2.

Then, the CPU 22 moves on to step SP54, checks the content of this provisional order (number of prints, desired date/time for the print to be finished, etc.), checks whether this order for the image print is acceptable or not and then moves on to the next step SP55 and transmits the check result to the server apparatus 2 as the reception confirmation data.

In step SP56, upon reception of the reception confirmation data transmitted from the host print service apparatus PO₁ to POₙ, the CPU 45 of the server apparatus 2 moves on to the next step SP57 and transmits the order reception result based on the reception confirmation data to the print service supply apparatus PM₁ to PMₙ or print ordering apparatus PN₁ to PNₙ, which is the orderer, as the order reception result data.

In step SP45, upon reception of the reception result data transmitted from the server apparatus 2, the CPU 22 of the print service supply apparatus PM₁ to PMₙ or print ordering apparatus PN₁ to PNₙ checks the content of the received reception result.

At this time, in the case where this reception result has the content whose provisional order is acceptable, the CPU 22 displays on the monitor 11A a charging screen (not shown) with almost the same configuration as that in Fig. 24 to display a fee, which is set according to the order content selected by the user.

Then, when the billing control section 16C decides that the user has deposited a sum of money (bills or coins) equal to or exceeding the set fee through the money slot, the CPU 22 reads the corresponding image data in the hard disk apparatus 26 and the corresponding ordering data and transmits this as official ordering data to the server apparatus 2 via the bus 21 and terminal adapter section 25 sequentially.

Then, when transmission of this official ordering data is completed, the CPU 22 displays the difference between the sum of the money deposited and the set fee based on the decision of the billing control section 16C on the monitor 11A as an order completion screen (not shown) with almost the same configuration as that in Fig. 26 together with a message "Ordering is completed."

At the same time, the CPU 22 controls the billing section 16 to clear the account by ejecting the change from the fee outlet, and the CPU 22 controls the receipt printer 13 by giving a receipt issuance signal S3 to issue a receipt in which this order reception number is clearly specified according to the user's request to the receipt printer 13 and ejects the receipt from the fee outlet.

By the way, the user notifies the reception number of the receipt obtained this time and the password set by the user to a relative, etc. in a remote place via a telephone, etc. Then, the other end of communication in the remote place visits the nearest print service supply apparatus PM₁ to PMₙ or print ordering apparatus PN₁ to PNₙ and performs the above predetermined input operations corresponding to the reception number and secret number notified by the user and thereby can print an image based on the image data stored in the server apparatus 2, store the image data in a predetermined recording medium or order printing based on the image data.

Then, the CPU 22 moves on to step SP46 and transmits the service information of the user based on this service to the server apparatus 2 as the sales information, moves on to step SP47 and finishes this print ordering/delivery processing procedure RT1.

On the other hand, the server apparatus 2 receives the sales information transmitted from the CPU 22 of the print service supply apparatus PM₁ to PMₙ or print ordering apparatus PN₁ to PNₙ in step SP48 and updates the customer data for user control stored in the large-volume memory 43 based thereon.

Then, upon reception of the official ordering data transmitted from the CPU 22 of the print service supply apparatus PM₁ to PMₙ or print ordering apparatus PN₁ to PNₙ in step SP58, the CPU 45 of the server apparatus 2 accesses the host print service apparatus PO₁ to POₙ which is the order destination based on the received official ordering data, transmits the image data of this official ordering data and instructs that an image based on the image data be printed.

Thereby, by receiving the image data of the official order and the instruction for printing the image data transmitted from the CPU 45 of the server apparatus 2 in step SP59, the CPU 22 of the corresponding host print service apparatus PO₁ to POₙ receives the order for printing the image transmitted from the server apparatus 2.

Thereby, the CPU 22 moves on to the next step SP60, prints an image based on the received image data according to the received order content, and when the printing is completed, the CPU 22 moves on to the next step SP61 and reports the server apparatus 2 that the ordered printing has been completed.

As a result, when the CPU 45 of the server apparatus 2 receives the report on the completion of printing of the image based on this order from the host print service apparatus PO₁ to POₙ, the CPU 45 confirms that the ordered printing of the image has been completed.

In this way, the user can receive the requested image prints by visiting the host print service apparatus PO₁ to POₙ at the specified order destination on a specified date and time.

By the way, in the case where the content of the reception result given from the server apparatus 2 in step SP45 is that the provisional order will not be accepted (e.g., because the server apparatus 2 is jammed with other reservations), the CPU 22 of the print service supply apparatus PM₁ to PMₙ or print ordering apparatus PN₁ to PNₙ displays a print reservation change screen PF17 as shown in Fig. 39 on the monitor 11A.

This print reservation change screen PF17 shows the date/time closest to the user-specified reservation date/time specified by the server apparatus 2 based on the reservation date/time that the user specified at the time of provisional ordering in a reservation date/time display section SN3, and only when the user approves the change to the date/time on this print reservation change screen PF17, the CPU 22 displays on the monitor 11A a charging screen (not shown) with almost the same configuration as that in Fig. 24 indicating a fee, which is set according to the ordering content selected by the user.

Then, when the billing control section 16C decides that the user has deposited a sum of money (bills and/or coins) equal to or exceeding the set fee through the money slot, the CPU 22 reads the corresponding image data and the corresponding ordering data (whose reservation date/time has been changed) in the hard disk apparatus 26 and transmits this data as official ordering data to the server apparatus 2 via the bus 21 and terminal adapter section 25 sequentially.

Then, when transmission of this official ordering data is completed in SP45, the CPU 22 displays the difference between the sum of the money deposited and the set fee based on the decision of the billing control section 16C on the monitor 11A as an order completion screen (not shown) with almost the same configuration as that in Fig. 26 together with a message "Ordering is completed."

At this time, the CPU 22 controls the billing section 16 to clear the account by ejecting the change from the fee outlet, controls the receipt printer 13 through a receipt issuance signal S3 according to the user's request to issue a receipt with this order reception number specified and ejects the receipt from the fee outlet.

Then, the CPU 22 moves on to step SP46 and transmits the service information of the user based on this service to the server apparatus 2 as the sales information, moves on to step SP47 and finishes this print ordering/delivery processing procedure RT1.

On the other hand, the server apparatus 2 receives the sales information transmitted from the CPU 22 of the print service supply apparatus PM₁ to PMₙ or print ordering apparatus PN₁ to PNₙ in step SP48 and updates the customer data for user control stored in the large-volume memory 43 based thereon.

On the other hand, in the case where the date/time on the print reservation change screen PF17 displayed on the monitor 11A is inconvenient to the user in step SP45, the CPU 22 of the print service supply apparatus PM₁ to PMₙ or print ordering apparatus PN₁ to PNₙ sets the reservation date/time again and when the user decides a change to the date/time on the print reservation change screen PF17 in the end, then the CPU 22 displays on the monitor 11A a charging screen (not shown) with almost the same configuration as that in Fig. 24, which indicates a fee, which is set according to the decided ordering content.

Then, when the billing control section 16C decides that the user has deposited a sum of money (bills or coins) equal to or exceeding the set fee through the money slot, the CPU 22 reads the corresponding image data and the corresponding ordering data (whose reservation date/time has been changed) in the hard disk apparatus 26 and transmits this data as official ordering data to the server apparatus 2 via the bus 21 and terminal adapter section 25 sequentially.

Then, when transmission of this official ordering data is completed in SP45, the CPU 22 displays the difference between the sum of the money deposited and the set fee based on the decision of the billing control section 16C on the monitor 11A as an order completion screen (not shown) with almost the same configuration as that in Fig. 26 together with a message "Ordering is completed."

At this time, the CPU 22 controls the billing section 16 to clear the account by ejecting the change from the fee outlet, controls the receipt printer 13 through a receipt issuance signal S3 according to the user's request to issue a receipt with this order reception number specified and ejects the receipt from the fee outlet.

Then, the CPU 22 moves on to step SP46 and transmits the service information of the user based on this service to the server apparatus 2 as the sales information, moves on to step SP47 and finishes this print ordering/delivery processing procedure RT1.

On the other hand, the CPU 45 of the server apparatus 2 receives the sales information transmitted from the CPU 22 of the print service supply apparatus PM₁ to PMₙ or print ordering apparatus PN₁ to PNₙ in step SP48 and updates the customer data for user control stored in the large-volume memory 43 based thereon.

On the other hand, in step SP37, when the CPU 22 of the print service supply apparatus PM₁ to PMₙ or print ordering apparatus PN₁ to PNₙ obtains an affirmative result by the user selecting the icon IC2 corresponding to "Save in server apparatus 2" on the operation selection screen PF1B (Fig. 27) in the previous step SP22, the CPU 22 moves on to step SP63 and displays on the monitor 11A a saving image selection screen (not shown) made up of almost the same configuration as that of the print image selection screen PF6 (Fig. 21) corresponding to the icon IC2.

Then, when the user selects all desired images from among the plurality of thumbnail images of the saving image selection screen displayed on the monitor 11A, the CPU 22 creates saving request data to save the image data of the selected image in the server apparatus 2 for a predetermined period of time.

This saving request data has almost the same configuration as that of the provisional ordering data D8 and is configured by information such as the period of time during which the image data is saved in the server apparatus 2 instead of the information on the printing content (number of prints, desired date/time for the print to be finished) of the provisional ordering data D8 and information specifying the host print service apparatus PO₁ to POₙ at the order destination.

Then, the CPU 22 displays on the monitor 11A a saving request setting screen (not shown) to specify and enter user data made up of the name, address and phone number of the user, a password that the user can set arbitrarily and the period for saving the image data in the server apparatus 2, and when the user enters necessary items corresponding to the saving request setting screen, the CPU 22 transmits this to the server apparatus 2 as the saving request data.

Then, in step SP64, the CPU 45 of the server apparatus 2 receives the saving request data transmitted from the print service supply apparatus PM₁ to PMₙ or print ordering apparatus PN₁ to PNₙ and verifies the content of the received saving request data.

Then, the CPU 45 moves on to the next step SP65, stores the image data whose saving is requested by this saving request data added to the customer data to control the images of the large-volume memory 43 and moves on to the next step SP66, sets a reception number for the stored image data, controls the customer data based on the reception number and thereby stores the image data for the requested period of time.

Then, the CPU 45 transmits the reception number issued in this step SP66 to the corresponding print service supply apparatus PM₁ to PMₙ or print ordering apparatus PN₁ to PNₙ.

In this way, when the CPU 22 of the print service supply apparatus PM₁ to PMₙ or print ordering apparatus PN₁ to PNₙ receives the reception number transmitted from the server apparatus 2 in step SP67, the CPU 22 moves on to the next step SP68 and displays on the monitor 11A a charging screen (not shown) with almost the same configuration as that in Fig. 24 indicating a fee, which is set according to the request for saving the image data in this server apparatus 2.

Then, when the billing control section 16C decides that the user has deposited a sum of money (bills or coins) equal to or exceeding the set fee through the money slot, the CPU 22 controls the billing section 16 to clear the account by ejecting the change from the fee outlet, and the CPU 22 controls the receipt printer 13 through a receipt issuance signal S3 according to the user's request to issue a receipt with this image saving reception number specified and eject the receipt from the fee outlet.

Then, the CPU 22 moves on to step SP69 and transmits the service information of the user based on this service to the server apparatus 2 as the sales information, then moves on to step SP70 and finishes this print ordering/delivery processing procedure RT1.

On the other hand, the CPU 45 of the server apparatus 2 receives the sales information transmitted from the CPU 22 of the print service supply apparatus PM₁ to PMₙ or print ordering apparatus PN₁ to PNₙ in step SP71 and updates the customer data for user control stored in the large-volume memory 43 based thereon.

Then, when the user visits the nearest print service supply apparatus PM₁ to PMₙ, print ordering apparatus PN₁ to PNₙ or host print service apparatus PO₁ to POₙ and enters a predetermined reception number and password, the CPU 22 of the print service supply apparatus PM₁ to PMₙ, print ordering apparatus PN₁ to PNₙ or host print service apparatus PO₁ to POₙ transmits the reception number and password entered and set in this way to the server apparatus 2 in step SP72.

Then, when the CPU 45 of the server apparatus 2 receives the reception number and password transmitted in this way in step SP73, the CPU 45 compares the received password with the password recorded in the customer data, verifies the received password, and if the password is authenticated, the CPU 45 transmits the corresponding image data to the corresponding print service supply apparatus PM₁ to PMₙ, print ordering apparatus PN₁ to PNₙ or host print service apparatus PO₁ to POₙ.

When the CPU 22 of the print service supply apparatus PM₁ to PMₙ, print ordering apparatus PN₁ to PNₙ or host print service apparatus PO₁ to POₙ receives the transferred (downloaded) image data in step SP74, the CPU 22 displays an image based on the image data on the monitor 11A.

This allows the user to browse the image based on the image data stored in the server apparatus 2, and furthermore print, record in a recording medium or order the image as described above.

### (4) Periodic Work Processing Procedure in Server Apparatus

In this print system 1, while the server apparatus 2 is not accessed from the print service supply apparatus PM₁ to PMₙ, print ordering apparatus PN₁ to PNₙ, host print service apparatus PO₁ to POₙ or client computer PC₁ to PCₙ (standby state), the CPU 45 starts a periodic work processing procedure RT2 shown in Fig. 40 in step SP80 and executes periodic work (hereinafter referred to as "periodic work").

In this case, such periodic work includes, for example, checking of the storage period of image data stored in the large-volume memory 43, summing of money unclaimed to the user (to be claimed at the end of month altogether), time-variable template images, etc. distributed to the print service supply apparatus PM₁ to PMₙ, print ordering apparatus PN₁ to PNₙ or host print service apparatus PO₁ to POₙ.

That is, when the CPU 45 is in such a standby state, the CPU 45 starts this periodic work processing procedure RT2 in step SP80, moves on to the next step SP81 and waits until the periodic work is found and when the periodic work is found in this step SP81, the CPU 45 moves on to the next step SP82.

Then, in this step SP82, when the CPU 45 executes the periodic work, then the CPU 45 moves back to step SP81 and waits until the periodic work is found again.

In this way, by repeating this loop of step SP81 to SP82 in the above-described standby state sequentially, the CPU 45 executes periodic work, which is not processed yet.

### (5) Operation and Effect of This Embodiment

In this print system 1 with the above configuration, a plurality of the server apparatuses 2 is installed in the street and creates a customer list and a control image list based on image data and the corresponding ordering data transmitted from the print service supply apparatus PM₁ to PMₙ and print ordering apparatus PN₁ to PNₙ connected via the network 3, stores this image data for a period of time specified by the user or for a predetermined period based on the control image list, performs customer control based on this customer list, and thereby orders the user-specified host print service apparatus PO₁ to POₙ to print based on this image data.

At this time, the server apparatus 2 issues a specific ID number to the user who is the transmitter based on this ordering data, issues a reception number for the service contents corresponding to the user's request and controls these by a password arbitrarily set by the user.

Therefore, in this print system 1, the server apparatus 2 can transmit specified image data to an arbitrary print service supply apparatus PM₁ to PMₙ, print ordering apparatus PN₁ to PNₙ or host print service apparatus PO₁ to POₙ according to the user's request, allowing the user to browse images, order printing of selected images, record images in a recording medium or print images on the spot using an arbitrary print service supply apparatus PM₁ to PMₙ, print ordering apparatus PN₁ to PNₙ at the user's convenience. In this way, this print system 1 alleviates the inconvenience of the user having to visit a predetermined shop to order or receive prints.

Furthermore, the server apparatus 2 in this print system 1 instructs a repeater user to input a predetermined ID number, allows the user to save time and trouble to operate to obtain desired processing based on past service information corresponding to the ID number entered and preferentially execute user-specific processing through simplified operations on GUI screens.

Moreover, in the case of transmitting such a print image to the other end of communication in a remote place, the user notifies the other end of communication in the remote place of a reception number and password beforehand. The other end of communication visits the specified print service supply apparatus PM₁ to PMₙ and can receive the desired print image through the above-described predetermined operations based on the received reception number and password on the spot, and in this way this print system makes it possible to easily transmit/receive print images to/from the other end of communication in a remote place, eliminating the trouble of mailing or distributing recording media, etc. in which the print image or image data is recorded.

Furthermore, in the case where the user's home or office, etc. is provided with a personal computer environment, the user can use this personal computer environment as a client computer PC₁ to PCₙ and read the image data of the server apparatus 2 via the internet, and therefore the user can transmit a request for prints based on the image data to the server apparatus 2, and in the case where this client computer PC₁ to PCₙ is provided with a printer, the user can print the image on the spot, which significantly reduces the burden on the user to order and receive prints all the more.

Furthermore, in this print system 1, the server apparatus 2 stores a plurality of template image data pieces corresponding to various template images allowing the user to download this template image data from the server apparatus 2 using each print service supply apparatus PM₁ to PMₙ, print ordering apparatus PN₁ to PNₙ, host print service apparatus PO₁ to POₙ or client computer PC₁ to PCₙ.

In this way, this print system 1 can easily combine the user's desired template image based on various template image data downloaded from the server apparatus 2 with the print image requested by the user, eliminating the need for the user to purchase application software for such image combination.

According to the above-described configuration, when ordering and reception of prints is carried out at a predetermined terminal connected via a network, the server apparatus 2 controls the customers and images and the user can thereby receive print images using a terminal that suits the convenience of the user and the server apparatus 2 can simplify operations according to the utilization history of the user, making it possible to reduce the inconvenience of the user having to visit the shop to order or receive prints, facilitate ordering of prints of images, thus implementing the print system 1 capable of significantly improving the convenience of ordering and reception of prints.

### (6) Other Embodiments

The above-described embodiment describes the case where the print service supply apparatus PM₁ to PMₙ or print ordering apparatus PN₁ to PNₙ is applied as a terminal, but the present invention is not limited to this, and is widely applicable to various kinds of terminal as far as such a terminal is installed in the street, transmits image data to the server apparatus 2 via a network and reads image data specified according to external operations via a network.

Furthermore, the above-described embodiment describes the case where the printers 14, 15 and 30 of the print service supply apparatus PM₁ to PMₙ and host print service apparatus PO₁ to POₙ are used as the printing means, but the present invention is not limited to this, and is widely applicable to various kinds of printing means as far as such printing means reads image data from the server apparatus 2 via a network and prints images based on the read image data.

Furthermore, the above-described embodiment describes the case where the large-volume memory 43 of the server apparatus 2 is used as the storing means, but the present invention is not limited to this, and is widely applicable to various kinds of storing means as far as such storing means stores image data supplied via a network in association with specific identification information.

Furthermore, the above-described embodiment describes the case where image data D2 recorded in various recording media such as memory stick, compact flash, smart media, floppy disk, compact disk or PC card and image data D3 loaded from a digital still camera, etc. via the video capture board 19A, scanner 19B and digital interface circuit 19C are used as image data loaded from a recording medium, but the present invention is not limited to this, and is widely applicable to various kinds of image data as far as such image data is electronically captured in a recording medium.

Furthermore, the above-described embodiment describes the case where template image data D7 is used as combined image data, but the present invention is not limited to this, and is widely applicable to various kinds of combined image data as far as such combined image data is the one to be combined with images desired by the user.

Furthermore, the above-described embodiment describes the case where the CPU 45 of the server apparatus 2 is used as billing processing means and according to the billing processing carried out by the billing section 16 of the print service supply apparatus PM₁ to PMₙ and print ordering apparatus PN₁ to PNₙ, billing processing is carried out based on billing information given from the print service supply apparatus PM₁ to PMₙ and print ordering apparatus PN₁ to PNₙ via a network and via the terminal adapter section 48 and bus 51 sequentially, but the present invention is not limited to this, and is widely applicable to various kinds of billing processing section as far as such a billing processing section calculates a fee based on the processing content selected by the user and performs predetermined billing processing according to the calculation result.

Furthermore, the above-described embodiment describes the case where the CPU 45, interface circuit 50 and bus 51 on the personal computer 40 of the server apparatus 2 are used as the reading means and under the control of the CPU 45, image data read from the large-volume memory 43 is read via the interface circuit 50 and bus 51 sequentially, but the present invention is not limited to this, and is widely applicable to various kinds of reading means as far as such reading means reads image data corresponding to the identification information based on a reading request and identification information transmitted from the terminal via a network.

Furthermore, the above-described embodiment describes the case where the CPU 45, interface circuit 50, bus 51 and terminal adapter 48 on the personal computer 40 of the server apparatus 2 are used as the transmitting means and under the control of the CPU 45, image data read from the large-volume memory 43 is transmitted via the interface circuit 50, bus 51 and terminal adapter 48 sequentially and via network 3 to the corresponding print service supply apparatus PM₁ to PMₙ and print ordering apparatus PN₁ to PNₙ, but the present invention is not limited to this, and is widely applicable to various kinds of transmitting means as far as such transmitting means transmits image data read from the storing means by the reading means to the corresponding print service supply apparatus PM₁ to PMₙ and print ordering apparatus PN₁ to PNₙ via a network.

Furthermore, the above-described embodiment describes the case where an 18-digit and 4-digit numbers are set and entered as a reception number and secret number as identification information, but the present invention is not limited to this, and it is also possible to use as the reception information and secret number, hiragana, katakana, alphabets, Greek characters or a mixture of various types of characters or with the number of digits other than 18 digits or 4 digits as far as such characters and digit configuration make it possible to verify image data stored in the server apparatus 2 and prevent the image data from being read by unauthorized people other than people concerned.

Furthermore, the above-described embodiment describes the case where in steps SP13, SP36 or steps SP14 and SP45 in the print ordering/delivery processing procedure RT1 in Fig. 12 to Fig. 14, a PC card or floppy disk is used as a recording medium which has recorded or will record any desired images, but the present invention is not limited to this, and is widely applicable to various kinds of recording media such as memory stick, compact flash, smart media and compact disk as far as such recording media can electronically capture images via a digital still camera, etc.

## Claims

1. An information storage system comprising:
a server apparatus (2) connected to a network (3, 4), said server apparatus (2) having storage means (43) for storing image data (D2) supplied via said network (3, 4) in association with specific identification information, reading means (40) for reading image data corresponding to identification information from said storage means (43) in response to a reading request, and transmitting means for transmitting said image data (D2) read from said storage means (43) via said network (3, 4); and
a plurality of user terminals (PM) located at various places, each of said user terminals (PM) being adapted to transmit image data (D2) and associated specific identification information to said server apparatus (2) via said network (3, 4),
**characterized in that**
each of said user terminals (PM) adapted to transmit a reading request and associated identification information to said server apparatus (2) and to receive image data (D2) corresponding to said transmitted identification information transmitted by said transmitting means via said network (3, 4); and
said server apparatus (2) is adapted to store, in said storage means (43), ordering data supplied together with said image data (D2) from a user terminal (PM) via said network (3, 4) and created by external operations by said user based on said user's desired utilization of said image data, in association with said identification information in a utilization history;
said reading means (40) is adapted to read said user's utilization history stored in said storage means (43) based on said reading request and said identification information; and
said transmitting means is adapted to transmit said user's utilization history to said user terminal (PM) in response to said reading request.

2. The information storage system according to Claim 2, wherein
said server apparatus (2) is adapted to create customer data based on said ordering data given from said user terminal (PM) and to perform customer control based on the above customer data.

3. The information storage system according to Claim 1 or 2, wherein
each of said user terminals (PM) includes printing means (13..15) for printing an image based on said image data read from said server apparatus (2) according to said external operations via said network (3, 4).

4. The information storage system according to anyone of Claims 1 to 3, wherein
each of said user terminals (PM) includes recording means (12) for recording, in a recording medium, said image data (D2) read from said server apparatus (2) according to said external operations via said network.

5. The information storage system according to anyone of Claims 1 to 4, wherein
said server apparatus (2) includes billing processing means for calculating a fee based on said ordering data and performing predetermined billing processing according to the calculation result.

6. The information storage system according to anyone of Claims 1 to 5, wherein
said storage means (43) stores not only said image data but also template data to form template images, wherein said reading means (40) is adapted to read said template data from said storage means (43) based on a reading request transmitted from a user terminal (PM) via said network (3, 4) and said transmitting means is adapted to transmit said template data read from said storage means (43) by said reading means (40) to the requesting user terminal (PM) in response to said reading request via said network (3, 4).

7. An information control method for a storage system comprising a server apparatus (2) connected to a network (3, 4) and a plurality of user terminals (PM) located at various places, each of said user terminals (PM) being adapted to transmit image data (D2) and associated specific identification information to said server apparatus (2) via said network (3, 4), the information control method comprising
a step of storing, in a storage means (43) of said server apparatus (2), image data and associated specific identification information (D2) supplied from a user terminal (PM) via a network (3, 4)
a step of reading, from said storage means (43), image data (D2) corresponding to specific identification information based on a reading request; and
a step of transmitting said image data (D2) read from said storage means (43) via said network (3, 4),
**characterized in that**
each of said user terminals (PM) is adapted to transmit a reading request and associated specific identification information to said server apparatus (2) and to receive image data (D2) corresponding to said transmitted identification information, transmitted by said transmitting means via said network (3, 4), wherein
in said storing step, ordering data supplied together with said image data (D2) from a user terminal (PM) via said network (3, 4) and created by external operations by said user based on said user's desired utilization of said image data are stored in said storage means (43) in association with said identification information in a utilization history;
in said reading step, said user's utilization history stored in said storage means (43) is reads based on said reading request and said identification information; and
in said transmilting step, said image data (D2) and said user's utilization history read by said reading means (40) are transmitted to said user terminal (PM) in response to said reading request.

8. The information control method according to Claim 7, wherein
said user's utilization history includes at least one of personal information of said user, preference information and billing information.

9. The information control method according to Claim 8, wherein
said personal information of said user includes at least one of said user's name, address, phone number and e-mail address.

10. The information control method according to anyone of Claims 7 to 9, wherein
in said transmitting step, said read image data are transmitted via said network (3, 4) to a user terminal specified by said user by said reading request given via said network.

11. The information control method according to anyone of Claims 7 to 10,
in said storing step, not only said image data but also template data to form template images are stored.

12. The information control method according to Claim 11, wherein
in said reading step, template data are read from said storage means (43) based on a reading request transmitted from a user terminal (PM) via said network (3, 4); and
in said transmitting step, said template data read from said storage means (43) are transmitted to said user terminal (PM) in response to said reading request via said network (3, 4).

13. The information control method according to anyone of Claims 7 to 12, further comprising
a step of calculating a fee based on said user's desired utilization and performing predetermined billing processing according to the above calculation result.

## Patentansprüche

1. Informationsspeichersystem, welches umfasst:
eine Servervorrichtung (2), welche mit einem Netzwerk (3, 4) verbunden ist, wobei die Servervornchtung (2) eine Speichereinrichtung (43) hat, um Bilddaten (D2), welche über das Netzwerk (3, 4) zugeführt werden, in Verbindung mit spezifischer Identifikationsinformation zu speichern, eine Leseeinrichtung (40), um Bilddaten entsprechend Identifikationsinformation von der Speichereinrichtung (43) als Antwort auf eine Leseanforderung zu lesen, und eine Übertragungseinrichtung, um die Bilddaten (D2), welche von der Speichereinrichtung (43) gelesen werden, über das Netzwerk (3, 4) zu übertragen; und
mehrere Benutzerendgeräte (PM), welche an verschiedenen Stellen angeordnet sind, wobei jedes der Benutzerendgeräte (PM) angepasst ist, Bilddaten (D2) und verknüpfte spezifische Identifikationsinformation zur Servervorrichtung (2) über das Netzwerk (3, 4) zu übertragen,
**dadurch gekennzeichnet, dass**
jedes der Benutzerendgeräte (PM) angepasst ist, eine Leseanforderung und verknüpfte Identifikationsinformation zur Servervorrichtung (2) zu übertragen und um Bilddaten (D2) entsprechend der übertragenen Identifikationsinformation, welche über die Übertragungseinrichtung übertragen wurde, über das Netzwerk (3, 4) zu empfangen; und
die Servervorrichtung (2) angepasst ist, in der Speichereinrichtung (43) Order-Daten zu speichern, welche zusammen mit den Bilddaten (D2) von einem Benutzerendgerät (PM) über das Netzwerk (3, 4) zugeführt werden und über externe Operationen durch den Benutzer auf Basis gewünschter Nutzung der Bilddaten des Benutzers in Verbindung mit der Identifikationsinformation in einem Nutzungsprotokoll gebildet werden;
die Leseeinrichtung (40) angepasst ist, das Nutzungsprotokoll des Benutzers, welches in der Speichereinrichtung (43) gespeichert ist, auf Basis der Leseanforderung und der Identifikationsinformation zu lesen; und
die Übertragungseinrichtung angepasst ist, das Nutzungsprotokoll des Benutzers zum Benutzerendgerät (PM) als Antwort auf die Leseanforderung zu übertragen.

2. Informationsspeichersystem nach Anspruch 2, wobei
die Servervorrichtung (2) angepasst ist, Kundendaten auf Basis der Order-Daten, welche vom Benutzerendgerät (PM) abgegeben werden, zu bilden, und um Kundenkontrolle auf Basis der obigen Kundendaten durchzuführen.

3. Informationsspeichersystem nach Anspruch 1 oder 2, wobei
jedes der Benutzerendgeräte (PM) eine Druckeinrichtung (13...15) aufweist, um ein Bild auf Basis der Bilddaten zu drucken, welche von der Servervorrichtung (2) gemäß den externen Operationen über das Netzwerk (3, 4) gelesen werden.

4. Informationsspeichersystem nach einem der Ansprüche 1 bis 3, wobei
jedes der Benutzerendgeräte (PM) eine Aufzeichnungseinrichtung (12) aufweist, um auf einem Aufzeichnungsmedium die Bilddaten (D2), welche von der Servervorrichtung (2) gemäß den externen Operationen über das Netzwerk gelesen werden, aufzuzeichnen.

5. Informationsspeichersystem nach einem der Ansprüche 1 bis 4, wobei
die Servervorrichtung (2) eine Rechnungsstellungs-Verarbeitungseinrichtung aufweist, um eine Gebühr auf Basis der Order-Daten zu berechnen und vorher festgelegte Rechnungsstellungs-Verarbeitung gemäß dem Rechnungsergebnis durchzuführen.

6. Informationsspeichersystem nach einem der Ansprüche 1 bis 5, wobei
die Speichereinrichtung (43) nicht nur die Bilddaten speichert, sondern auch Dokument-Vorlagen-Daten, um Dokument-Vorlagen-Bilder zu bilden, wobei die Leseeinrichtung (40) angepasst ist, die Dokument-Vorlagen-Daten von der Speichereinrichtung (43) auf Basis einer Leseanforderung, welche von einem Benutzerendgerät (PM) über das Netzwerk (3, 4) übertragen wird, zu lesen, und die Übertragungseinrichtung angepasst ist, die Dokument-Vorlagen-Daten, welche von der Speichereinrichtung (43) übertragen werden, über die Leseeinrichtung (40) zum anfordernden Benutzerendgerät (PM) als Antwort auf die Leseanforderung über das Netzwerk (3, 4) zu übertragen.

7. Informationssteuerverfahren für ein Speichersystem, welches eine Servervorrichtung (2) umfasst, welche mit einem Netzwerk (3, 4) verbunden ist, und mehrere Benutzerendgeräte (PM), welche an verschiedenen Orten angeordnet sind,
wobei jedes der Benutzerendgeräte (PM) angepasst ist, Bilddaten (D2) und verknüpfte spezifische Identifikationsinformation zur Servervorrichtung (2) über das Netzwerk (3, 4) zu übertragen, wobei das Informationssteuerverfahren umfasst:
einen Schritt, um in einer Speichereinrichtung (43) der Servervorrichtung (2) Bilddaten und verknüpfte spezifische Identifikationsinformation (D2), welche von einem Benutzerendgerät (PM) über ein Netzwerk (3, 4) zugeführt werden, zu speichern;
einen Schritt, um von der Speichereinrichtung (43) Bilddaten (D2) entsprechend spezifischer Identifikationsinformation auf Basis einer Leseanforderung zu lesen; und
einen Schritt, um die Bilddaten (D2), welche von der Speichereinrichtung (43) gelesen werden, über das Netzwerk (3, 4) zu übertragen, **dadurch gekennzeichnet, dass**
jedes der Benutzerendgeräte (PM) angepasst ist, eine Leseanforderung und verknüpfte spezifische Identifikationsinformation zur Servervorrichtung (2) zu übertragen und um Bilddaten (D2) entsprechend der übertragenen Identifikationsinformation zu empfangen, welche über die Übertragungseinrichtung über das Netzwerk (3, 4) übertragen wird, wobei
im Speicherschritt Order-Daten, welche zusammen mit den Bilddaten (D2) von einem Benutzerendgerät (PM) über das Netzwerk (3, 4) zugeführt werden und durch externe Operationen durch gewünschte Nutzung der Bilddaten auf Benutzerbasis des Benutzers in der Speichereinrichtung (43) gebildet werden, in Verbindung mit der Identifikationsinformation in einem Nutzungs-Protokoll gespeichert werden;
im Leseschritt das Nutzungs-Protokoll des Benutzers, welches in der Speichereinrichtung (43) gespeichert ist, auf Basis der Leseanforderung und der Identifikationsinformation gelesen wird; und
im Übertragungsschritt die Bilddaten (D2) und das Nutzungs-Protokoll des Benutzers, welche durch die Leseeinrichtung (40) übertragen werden, zum Benutzerendgerät (PM) als Antwort auf die Leseanforderung übertragen werden.

8. Informationssteuerverfahren nach Anspruch 7, wobei
das Nutzungs-Protokoll des Benutzers zumindest eines von persönlicher Information des Benutzers, Vorzugsinformation und Rechnungsstellungsinformation umfasst.

9. Informationssteuerverfahren nach Anspruch 8, wobei
die persönliche Information des Benutzers zumindest eines von dem Namen, der Adresse, der Telefonnummer und der E-Mail-Adresse des Benutzers umfasst.

10. Informationssteuerverfahren nach einem der Ansprüche 7 bis 9, wobei
im Übertragungsschritt die gelesenen Bilddaten über das Netzwerk (3, 4) zu einem Benutzerendgerät übertragen werden, welches durch den Benutzer durch die Leseanforderung spezifiziert wird, welche über das Netzwerk abgegeben wird.

11. Informationssteuerverfahren nach einem der Ansprüche 7 bis 10,
wobei im Speicherschritt nicht nur die Bilddaten, sondern auch die Dokument-Vorlagen-Daten, um Dokument-Vorlagen-Bilder zu bilden, gespeichert werden.

12. Informationssteuerverfahren nach Anspruch 11, wobei
im Leseschritt Dokument-Vorlagen-Daten von der Speichereinrichtung (43) auf Basis einer Leseanforderung gelesen werden, welche von einem Benutzerendgerät (PM) über das Netzwerk (3, 4) übertragen wird; und
im Übertragungsschritt die Dokument-Vorlagen-Daten, welche von der Speichereinrichtung (43) gelesen werden, zum Benutzerendgerät (PM) als Antwort auf die Leseanforderung über das Netzwerk (3, 4) übertragen werden.

13. Informationssteuerverfahren nach einem der Ansprüche 7 bis 12, welches außerdem umfasst:
einen Schritt zum Berechnen einer Gebühr auf Basis der gewünschten Nutzung des Benutzers und zum Durchführen vorgegebener Rechnungsstellungsverarbeitung gemäß dem obigen Berechnungsergebnis.

## Revendications

1. Système de stockage d'informations comprenant :
un serveur (2) relié à un réseau (3, 4), ledit serveur (2) ayant un moyen de stockage (43) destiné à stocker des données d'image (D2) fournies via ledit réseau (3, 4) en association avec des informations d'identification spécifiques, un moyen de lecture (40) destiné à lire des données d'image correspondant à des informations d'identification depuis ledit moyen de stockage (43) en réponse à une demande de lecture, et un moyen de transmission destiné à transmettre lesdites données d'image (D2) lues depuis ledit moyen de stockage (43) via ledit réseau (3, 4) ;
et
une pluralité de terminaux utilisateur (PM) situés à différents endroits, chacun desdits terminaux utilisateur (PM) étant adaptés afin de transmettre des données d'image (D2) et des informations d'identification spécifiques associées audit serveur (2) via ledit réseau (3, 4),
**caractérisé en ce que**
chacun desdits terminaux utilisateur (PM) est adapté afin de transmettre une demande de lecture et des informations d'identification associées audit serveur (2) et de recevoir des données d'image (D2) correspondant auxdites informations d'identification transmises par ledit moyen de transmission via ledit réseau (3, 4) ; et
ledit serveur (2) est adapté afin de stocker, dans ledit moyen de stockage (43), des données de classement fournies avec lesdites données d'image (D2) par un terminal utilisateur (PM) via ledit réseau (3, 4) et créées par des opérations externes par ledit utilisateur sur la base de ladite utilisation desdites données d'image souhaitée par l'utilisateur, en association avec lesdites informations d'identification dans un historique d'utilisation ;
ledit moyen de lecture (40) est adapté afin de lire ledit historique d'utilisation de l'utilisateur stocké dans ledit moyen de stockage (43) sur la base de ladite demande de lecture et desdites informations d'identification ; et
ledit moyen de transmission est adapté afin de transmettre ledit historique d'utilisation de l'utilisateur audit terminal utilisateur (PM) en réponse à ladite demande de lecture.

2. Système de stockage d'informations selon la revendication 2, dans lequel
ledit serveur (2) est adapté afin de créer des données client sur la base desdites données de classement fournies par ledit terminal utilisateur (PM) et d'effectuer un contrôle de client sur la base des données client ci-dessus.

3. Système de stockage d'informations selon la revendication 1 ou 2, dans lequel
chacun desdits terminaux utilisateur (PM) comprend un moyen d'impression (13-15) destiné à imprimer une image sur la base desdites données d'image lues depuis ledit serveur (2) selon lesdites opérations externes via ledit réseau (3, 4).

4. Système de stockage d'informations selon l'une quelconque des revendications 1 à 3, dans lequel
chacun desdits terminaux utilisateur (PM) comprend un moyen d'enregistrement (12) destiné à enregistrer, sur un support d'enregistrement, lesdites données d'image (D2) lues depuis ledit serveur (2) selon lesdites opérations externes via ledit réseau.

5. Système de stockage d'informations selon l'une quelconque des revendications 1 à 4, dans lequel
ledit serveur (2) comprend un moyen de traitement de facturation destiné à calculer des frais sur la base desdites données de classement et à effectuer un traitement de facturation prédéterminé selon le résultat des calculs.

6. Système de stockage d'informations selon l'une quelconque des revendications 1 à 5, dans lequel
ledit moyen de stockage (43) stocke non seulement lesdites données d'image mais également des données de modèles afin de former des modèles d'images, dans lequel ledit moyen de lecture (40) est adapté afin de lire lesdites données de modèles depuis ledit moyen de stockage (43) sur la base d'une demande de lecture transmise par un terminal utilisateur (PM) via ledit réseau (3, 4) et ledit moyen de transmission est adapté afin de transmettre lesdites données de modèles lues depuis ledit moyen de stockage (43) par ledit moyen de lecture (40) vers le terminal utilisateur demandeur (PM) en réponse à ladite demande de lecture via ledit réseau (3, 4).

7. Procédé de contrôle d'informations destiné à un système de stockage comprenant un serveur (2) relié à un réseau (3, 4) et une pluralité de terminaux utilisateur (PM) situés à différents endroits, chacun desdits terminaux utilisateur (PM) étant adapté afin de transmettre des données d'image (D2) et des informations d'identification spécifiques associées audit serveur (2) via ledit réseau (3, 4), le procédé de contrôle d'informations comprenant
une étape de stockage, dans un moyen de stockage (43) dudit serveur (2), de données d'image correspondant auxdites informations d'identification transmises (D2) fournies par un terminal utilisateur (PM) via un réseau (3, 4) ;
une étape de lecture, depuis ledit moyen de stockage (43), de données d'image (D2) correspondant aux informations d'identification spécifiques sur la base d'une demande de lecture ; et
une étape de transmission desdites données d'image (D2) lues depuis ledit moyen de stockage (43) via ledit réseau (3, 4),
**caractérisé en ce que**
chacun desdits terminaux utilisateur (PM) est adapté afin de transmettre une demande de lecture et des informations d'identification spécifiques associées audit serveur (2) et de recevoir des données d'image (D2) correspondant auxdites information d'identification transmises, transmises par ledit moyen de transmission via ledit réseau (3, 4), dans lequel
à ladite étape de stockage, des données de classement fournies avec lesdites données d'image (D2) par un terminal utilisateur (PM) via ledit réseau (3, 4) et créées par des opérations externes par ledit utilisateur sur la base de ladite utilisateur souhaitée de l'utilisateur sont stockées dans ledit moyen de stockage (43) en association avec lesdites informations d'identification dans un historique d'utilisation ;
à ladite étape de lecture, ledit historique d'utilisation de l'utilisateur stocké dans ledit moyen de stockage (43) est lu sur la base de ladite demande de lecture et desdites informations d'identification ; et
à ladite étape de transmission, lesdites données d'image (D2) et ledit historique d'utilisation de l'utilisateur lu par ledit moyen de lecture (40) sont transmis audit terminal utilisateur (PM) en réponse à ladite demande de lecture.

8. Procédé de contrôle d'informations selon la revendication 7, dans lequel
ledit historique d'utilisation de l'utilisateur comprend au moins l'un d'informations personnelles dudit utilisateur, d'informations de préférences et d'informations de facturation.

9. Procédé de contrôle d'informations selon la revendication 8, dans lequel
lesdites informations personnelles dudit utilisateur comprennent au moins l'un du nom, de l'adresse, du numéro de téléphone et de l'adresse e-mail dudit utilisateur.

10. Procédé de contrôle d'informations selon l'une quelconque des revendications 7 à 9, dans lequel
à ladite étape de transmission, lesdites données d'image lues sont transmises via ledit réseau (3, 4) à un terminal utilisateur spécifié par ledit utilisateur par ladite demande de lecture délivrée via ledit réseau.

11. Procédé de contrôle d'informations selon l'une quelconque des revendications 7 à 10, dans lequel
à ladite étape de stockage, non seulement lesdites données d'image mais également des données de modèles destinées à former des modèles d'images sont stockées.

12. Procédé de contrôle d'informations selon la revendication 11, dans lequel
à ladite étape de lecture, des données de modèles sont lues depuis ledit moyen de stockage (43) sur la base d'une demande de lecture transmise par un terminal utilisateur (PM) via ledit réseau (3, 4) ; et
à ladite étape de transmission, lesdites données de modèles lues depuis ledit moyen de stockage (43) sont transmises audit terminal utilisateur (PM) en réponse à ladite demande de lecture via ledit réseau (3, 4).

13. Procédé de contrôle d'informations selon l'une quelconque des revendications 7 à 12, comprenant en outre
une étape de calcul de frais sur la base de ladite utilisation souhaitée par l'utilisateur et de réalisation d'un traitement de facturation prédéterminé selon le résultat du calcul ci-dessus.
